(19) Europäisches Patentamt
European Patent Office
Office européen des brevets

(11) **EP 3 054 228 A1**

(12) **EUROPEAN PATENT APPLICATION**
published in accordance with Art. 153(4) EPC

(43) Date of publication:
**10.08.2016 Bulletin 2016/32**

(51) Int Cl.:
*F24F 7/08* (2006.01)   *D21H 27/00* (2006.01)
*D21H 27/30* (2006.01)   *F28F 3/08* (2006.01)
*F28F 21/00* (2006.01)

(21) Application number: **14850605.8**

(22) Date of filing: **30.09.2014**

(86) International application number:
**PCT/JP2014/076026**

(87) International publication number:
**WO 2015/050105 (09.04.2015 Gazette 2015/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.10.2013 JP 2013207464**

(71) Applicant: **Toray Industries, Inc.**
**Tokyo 103-8666 (JP)**

(72) Inventors:
• **TAKEDA, Hiroki**
**Otsu-shi**
**Shiga 520-2141 (JP)**

• **FUJIYAMA, Tomomichi**
**Otsu-shi**
**Shiga 520-2141 (JP)**
• **OMORI, Taira**
**Otsu-shi**
**Shiga 520-2141 (JP)**
• **SODE, Katsuya**
**Otsu-shi**
**Shiga 520-2141 (JP)**

(74) Representative: **Hoefer & Partner Patentanwälte mbB**
**Pilgersheimer Straße 20**
**81543 München (DE)**

(54) **HEAT EXCHANGE ELEMENT AND HEAT EXCHANGER**

(57)    In the present invention, there are provided a heat exchange element with a liner sheet high in water vapor transmission properties and gas shielding properties, specifically, which is prepared by combining a piece of single-faced corrugated cardboard 1 constituted of a liner sheet 1 with a carbon dioxide shielding rate of greater than or equal to 95% and a corrugated sheet 1 and a piece of single-faced corrugated cardboard 2 constituted of a liner sheet 2 with a water vapor permeability of greater than or equal to 80 g/m$^2$·hr and a corrugated sheet 2, and a heat exchanger.

【Fig.1】

EP 3 054 228 A1

**Description**

TECHNICAL FIELD

The present invention relates to a heat exchange element and a heat exchanger.

BACKGROUND ART

A heat exchanger has been attracting attention as an energy saving member for ventilating facilities of residential buildings and general buildings. The heat exchanger is composed of air passages from the inside and outside of a room, a heat exchange element and a blower. The heat exchange element has a structure in which the "temperature" and "humidity" of air to be exhausted from the inside of the room to the outside of the room are transferred into air to be supplied from the outside of the room to the inside of the room within this heat exchange element, and the air is returned to the inside of the room. With regard to the constitution of the heat exchange element, the heat exchange element is formed from a liner sheet and a corrugated sheet. In particular, the liner sheet is required to have heat transfer properties, water vapor transmission properties and air shielding properties for the purpose of enhancing the temperature exchange efficiency, the humidity exchange efficiency and the effective ventilation volume rate, and a technique for enhancing the performance thereof has been studied.

For example, there have been proposed a liner sheet which is obtained by allowing nanofibers to be incorporated in the liner sheet, is high in heat transfer properties and water vapor transmission properties and is excellent in gas shielding properties, and a heat exchange element prepared therewith (see Patent Document 1).

Moreover, there has been proposed a liner sheet which is obtained by using pulp with a beating degree of 45 to 65° for the liner sheet and being impregnated with a hygroscopic agent and a flameproofing agent, is high in water vapor transmission properties and is excellent in gas shielding properties and flameproofness (see Patent Document 2).

PRIOR ART DOCUMENTS

PATENT DOCUMENTS

Patent Document 1: Japanese Patent Laid-open Publication No. 2010-248680
Patent Document 2: Japanese Patent Laid-open Publication No. 2005-325473

SUMMARY OF THE INVENTION

PROBLEMS TO BE SOLVED BY THE INVENTION

With regard to a heat exchange element prepared with a conventional liner sheet, it is difficult to enhance all of the heat transfer properties, water vapor transmission properties and gas shielding properties, and in particular, the heat exchange element has had a difficulty in achieving both conflicting properties of water vapor transmission properties and gas shielding properties. Moreover, in the heat exchange element, there has also been a problem that the humidity exchange efficiency remains at a lower level than the temperature exchange efficiency and humidity is hardly exchanged compared with temperature.

The present invention aims to solve the above-described problems relating to the heat exchange element and the heat exchanger.

SOLUTIONS TO THE PROBLEMS

For the purpose of solving the above-mentioned problems, the heat exchange element according to the present invention has the following configuration.

(1) A heat exchange element, which is a stack of a piece of single-faced corrugated cardboard 1 constituted of a liner sheet 1 with a carbon dioxide shielding rate of greater than or equal to 95% and a corrugated sheet 1 and a piece of single-faced corrugated cardboard 2 constituted of a liner sheet 2 with a water vapor permeability of greater than or equal to 80 $g/m^2 \cdot hr$ and a corrugated sheet 2.

Moreover, as embodiments, there are provided the following heat exchange elements.

(2) The heat exchange element wherein the ratio of the area of the liner sheet 2 to the sum of areas of the liner sheet 1 and the liner sheet 2 in the heat exchange element is 20 to 50%.

(3) Any of the heat exchange elements wherein the area ratio of the liner sheet 2 to the sum of areas of the liner sheet 1 and the liner sheet 2 in a portion from at least one face among two bottom faces which the heat exchange element has to a height position of 50% of a distance between the two bottom faces is greater than or equal to 40%.

(4) Any of the heat exchange elements wherein the liner sheet 1 includes pulp with a Canadian standard freeness of less than or equal to 150 ml.

(5) Any of the heat exchange elements wherein the liner sheet 1 includes pulp with a fiber diameter of greater than or equal to 20 $\mu$m.

(6) Any of the heat exchange elements wherein the liner sheet 2 includes at least one layer of a gas shielding layer and at least one layer of a porous layer, and has a stacked structure thereof.

(7) The heat exchange element according to any one of claims 1 to 6, wherein the porous layer of the liner sheet (2) includes nanofibers of a thermoplastic resin.

Moreover, the heat exchanger according to the present invention has the following configuration.

(8) A heat exchanger having any of the heat exchange elements, an air supply blower and an air exhaust blower.

Moreover, as an embodiment, there is provided the following heat exchanger.

(9) A heat exchanger having the heat exchange element described in (3) above, an air supply multiblade blower and an air exhaust multiblade blower,

wherein the heat exchange element has a passage for air supply and a passage for air exhaust which are stacks of a piece of single-faced corrugated cardboard 1 and a piece of single-faced corrugated cardboard 2 to be stacked,

the air supply multiblade blower is disposed at the downstream side of the passage for air supply of the heat exchange element,

the air exhaust multiblade blower is disposed at the downstream side of the passage for air exhaust of the heat exchange element, and

one bottom face of the heat exchange element described in (3) allowing the area ratio of the liner sheet 2 to the sum of areas of the liner sheet 1 and the liner sheet 2 in a portion therefrom to a height position of 50% of the distance to be greater than or equal to 40% is positioned apart from a suction opening of the air supply multiblade blower, as compared with the other bottom face.

EFFECTS OF THE INVENTION

According to the present invention, there are provided a heat exchange element and a heat exchanger which are high in humidity exchange efficiency and effective ventilation volume rate.

BRIEF DESCRIPTION OF THE DRAWINGS

Fig. 1 is a plane perspective view showing a concept of a heat exchanger in accordance with the present embodiment.
Fig. 2 is an X-X line sectional view of Fig. 1 showing a doubt of a heat exchanger in accordance with the present embodiment.

EMBODIMENTS OF THE INVENTION

Hereinafter, an embodiment according to the invention will be described in detail.

A heat exchange element according to the present invention is a stack of a piece of single-faced corrugated cardboard 1 having a liner sheet 1 with a carbon dioxide shielding rate of greater than or equal to 95% and a corrugated sheet 1 and a piece of single-faced corrugated cardboard 2 having a liner sheet 2 with a water vapor permeability of greater than or equal to 80 g/m$^2$·hr and a corrugated sheet 2 to be stacked.

It is necessary to allow the carbon dioxide shielding rate of the liner sheet 1 used in the present invention to be greater than or equal to 95%. The carbon dioxide shielding rate serves as an index of gas shielding properties and affects the ventilation performance of a heat exchanger by which foul air in a room is exhausted to the outside of the room. A heat exchange element prepared with a liner sheet with a high carbon dioxide shielding rate has a high effective ventilation volume rate, and a heat exchanger prepared therewith has excellent ventilation performance. On the other hand, a heat exchange element prepared with a liner sheet with a low carbon dioxide shielding rate has a low effective ventilation volume rate, and the ventilation performance of a heat exchanger prepared therewith is lowered. The carbon dioxide shielding rate is more preferably greater than or equal to 98% and further preferably greater than or equal to 99%.

The liner sheet 1 that can be used in the present invention is exemplified by nonwoven fabric, a film or a metal film, and these may be used alone, but two or more kinds selected therefrom may be stacked. In particular, since paper, which is wet nonwoven fabric, allows fibers to be densely gathered, a sheet of paper is preferred as a liner sheet because the carbon dioxide shielding rate is high and the water vapor permeability is high. When the water vapor permeability of a liner sheet becomes high, the humidity exchange efficiency becomes high when made into a heat exchange element.

Examples of the fiber used for paper include N pulp (softwood pulp), L pulp (hardwood pulp), bagasse, wheat straw, reeds, papyrus, bamboo, pulp, cotton, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon), carbon fibers, metal fibers, glass fibers and the like. These fibers may be used alone, but two or more kinds of fibers selected therefrom may be included. In particular, preferred are natural fibers that can be fibrillated, and even among those, it is further preferred that only pulp (N pulp, L pulp), which is excellent in dispersibility and inexpensive, be used.

By subjecting pulp such as N pulp and L pulp to beating, since fibers are highly fibrillated and the sheet is allowed to have a dense structure, gases such as carbon dioxide are easily shielded. Above all, it is more preferred that N pulp be mainly used. With regard to the N pulp, as compared with the L pulp, the fiber cross section has a flat shape, and allowing flat fibers to overlap one another creates an effect of easily filling clearances through which gases pass. The Canadian standard freeness of the pulp is preferably less than or equal to 150 ml, more preferably less than or equal to 100 ml and further preferably less than or equal to 50 ml. By allowing the pulp to be further beaten, voids between fibers are filled with fibrillated fibers and it is possible to shield the gas transmission.

It is preferred that the liner sheet 1 contain pulp with a fiber diameter of greater than or equal to 20 $\mu$m. Whereby, unevenness is formed on the surface of the liner sheet 1, along which air is allowed to flow to generate a turbulent flow, and the residence time of air is elongated to heighten the temperature exchange efficiency and the humidity exchange efficiency. The fiber diameter is more preferably greater than or equal to 40 $\mu$m and further preferably greater than or equal to 60 $\mu$m. Although the upper limit is not particularly limited, from the viewpoint of dispersibility in a papermaking process, it is preferred that the fiber diameter be less than or equal to 100 $\mu$m. In the case where the liner sheet 1 is defined as 100% by mass, the content of the fiber with a fiber diameter of greater than or equal to 20 $\mu$m is preferably greater than or equal to 1% by mass, more preferably greater than or equal to 5% by mass, further preferably greater than or equal to 10% by mass, on the other hand, preferably less than or equal to 30% by mass, more preferably less than or equal to 25% by mass and further preferably less than or equal to 20% by mass. When the content is too small, there is little occurrence of a turbulent flow and the effect is decreased. Moreover, when the content is too large, the dispersibility with other fibers is lowered and it is not preferred because the gas shielding properties are lowered.

It is preferred that the liner sheet 1 contain a moisture absorbent. As the moisture absorbent, a halide, an oxide, a kind of salt, a hydroxide and the like can be used, and it is preferred that an alkali metal salt such as lithium chloride and an alkaline earth metal salt such as calcium chloride and magnesium chloride be used. Of these, lithium chloride and calcium chloride which have a high coefficient of water absorption are preferably used. Furthermore, lithium chloride which is capable of enhancing the humidity exchange efficiency with a smaller sticking amount thereof is most preferably used. Besides, the moisture absorbent may contain a urethane resin, polyvinyl alcohol, polyoxyethylene, polyethylene glycol, a polyoxyalkylene alkyl ether, sodium polyacrylsulfonate and the like. Furthermore, the moisture absorbent may also contain a functional agent such as an antifungal agent, an antibacterial agent, a bacteriostatic agent and a flame retardant. The content of the hygroscopic material in the liner sheet 1 is preferably greater than or equal to 5% by mass, more preferably greater than or equal to 10% by mass, further preferably greater than or equal to 15% by mass, on the other hand, preferably less than or equal to 30% by mass, more preferably less than or equal to 25% by mass and further preferably less than or equal to 20% by mass, in the case where the liner sheet 1 containing no moisture absorbent is defined as 100% by mass. By allowing the hygroscopic material to be contained in an amount greater than or equal to 5% by mass, the water vapor permeability of the liner sheet is further heightened and the humidity exchange efficiency is further enhanced. On the other hand, by allowing the content of the hygroscopic material to be less than or equal to 30% by mass, it is possible to suppress lowering of the strength of the liner sheet under a high humidity environment and to also suppress lowering of the adhesivity to an adhesive in the single-faced corrugated cardboard.

The basis weight of the liner sheet 1 is preferably greater than or equal to 30 g/m$^2$, more preferably greater than or equal to 35 g/m$^2$, further preferably greater than or equal to 40 g/m$^2$, on the other hand, preferably less than or equal to 70 g/m$^2$, more preferably less than or equal to 60 g/m$^2$ and further preferably less than or equal to 50 g/m$^2$. By allowing the basis weight to be greater than or equal to 30 g/m$^2$, it is possible to make the size of voids in the inside of the liner sheet 1 small to further enhance the carbon dioxide shielding rate of the liner sheet 1. Moreover, by allowing the basis weight to be less than or equal to 70 g/m$^2$, it is possible to enhance the temperature exchange efficiency since the heat resistance value of the liner sheet 1 can be lowered.

The thickness of the liner sheet 1 is preferably greater than or equal to 40 $\mu$m, more preferably greater than or equal to 45 $\mu$m, further preferably greater than or equal to 50 $\mu$m, on the other hand, preferably less than or equal to 70 $\mu$m, more preferably less than or equal to 65 $\mu$m and further preferably less than or equal to 60 $\mu$m. By allowing the

thickness of the liner sheet 1 to fall within the above-mentioned range, it is possible to suppress generation of fine holes inside the liner sheet 1 and to prevent the carbon dioxide shielding rate from being lowered, and it is possible to lower the heat resistance value and to enhance the temperature exchange efficiency.

The density of the liner sheet 1 is preferably greater than or equal to 0. 6 g/cm$^3$, more preferably greater than or equal to 0.8 g/cm$^3$ and further preferably greater than or equal to 1.0 g/cm$^3$. On the other hand, the density is preferably less than or equal to 3.0 g/cm$^3$, more preferably less than or equal to 2.5 g/cm$^3$ and further preferably less than or equal to 2.0 g/cm$^3$. The air permeability greatly depends on the density, and by allowing the density to be greater than or equal to the above lower limit, it is possible to keep the size of voids in the inside of the liner sheet 1 small and the air permeability is heightened. That is, high gas shielding properties can be attained and the carbon dioxide shielding rate is heightened. On the other hand, by allowing the density to be less than or equal to the above upper limit, it is possible to suppress lowering of the water vapor permeability of the liner sheet 1 and it is possible to enhance the humidity exchange efficiency of a heat exchange element prepared with the liner sheet 1.

With regard to the method for controlling the density of the liner sheet 1, for example, it is preferred that the liner sheet 1 be subjected to consolidation with a calender device or a press device in which the liner sheet 1 is pressed between rolls by means of a pair of rotating rolls or a plurality of rotating rolls. By performing the consolidation, it is possible to make the thickness of the liner sheet thin and to plug up small holes and the carbon dioxide shielding rate is heightened.

The air permeability of the liner sheet 1 is preferably greater than or equal to 10,000 seconds/100 ml, more preferably greater than or equal to 20,000 seconds/100 ml and further preferably greater than or equal to 30, 000 seconds/100 ml. The air permeability is considered to be involved in the gas shielding properties, the higher the air permeability becomes, the higher the gas shielding properties become, and the carbon dioxide shielding rate is heightened. Although the upper limit is not particularly limited, from the viewpoint of enhancement in water vapor transmission properties, it is preferred that the air permeability be less than or equal to 50, 000 seconds/100 ml.

The water vapor permeability of the liner sheet 1 is preferably greater than or equal to 20 g/m$^2$/hr, more preferably greater than or equal to 50 g/m$^2$/hr and further preferably greater than or equal to 70 g/m$^2$/hr. The water vapor permeability thereof is involved in the humidity exchange efficiency when the liner sheet 1 is used as a heat exchange element, and the liner sheet 1 is preferred because the higher the water vapor permeability becomes, the higher the humidity exchange efficiency becomes.

A production method of paper capable of being used for the liner sheet 1 will be exemplified below. First, a constituent fiber such as pulp is beaten. As a beating machine, a beater, a disc refiner, a deluxe finer, a jordan refiner, a grinder, a bead mill, a high-pressure homogenizer and the like can be used, and fibers can be dispersed by using those. In particular, it is preferred that fibers be ground for a long period of time with a beater to be beaten or be planed in a shorter period of time with a disc refiner to be beaten. Whereby, the carbon dioxide shielding rate of the liner sheet is heightened, and a heat exchange element prepared therewith is allowed to have a high effective ventilation volume rate. As a papermaking machine, a cylinder paper machine, a short wire cloth paper machine, a fourdrinier paper machine, a twin-wire paper machine, an on-top paper machine, a papermaking machine prepared by combining those machines, and the like can be used, and it is preferred that fibers which are high in the beating degree and are poor in water drainability be made into a sheet shape with a fourdrinier paper machine having a long dehydration function. After papermaking, by being subjected to supercalender processing or hot calender processing, it is possible to enhance the surface uniformity of base paper and to reduce the thickness.

With regard to a method for allowing a moisture absorbent to stick to the liner sheet 1, the liner sheet 1 can be subjected to application by coating, spraying or the like or immersion processing such as dipping to allow the moisture absorbent to stick thereto.

As the corrugated sheet 1 used in the present invention, nonwoven fabric or a film is preferably used. Even among those, paper which is wet nonwoven fabric with a high coefficient of moisture absorption is more preferably used. Examples of the fiber used for paper include N pulp (softwood pulp), L pulp (hardwood pulp), bagasse, wheat straw, reeds, papyrus, bamboo, pulp, cotton, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon), carbon fibers, metal fibers, glass fibers and the like. These fibers may be used alone, but two or more kinds of fibers selected therefrom may be included. In particular, more preferred is pulp (N pulp, L pulp) which is inexpensive.

The corrugated sheet 1 may also contain a functional agent such as an antifungal agent, an antibacterial agent, a bacteriostatic agent and a flame retardant.

The basis weight of the corrugated sheet 1 is preferably greater than or equal to 50 g/m$^2$, more preferably greater than or equal to 60 g/m$^2$, further preferably greater than or equal to 70 g/m$^2$, on the other hand, preferably less than or equal to 100 g/m$^2$, more preferably less than or equal to 90 g/m$^2$ and further preferably less than or equal to 80

$g/m^2$. By allowing the basis weight to be greater than or equal to 50 $g/m^2$, it is possible to suppress lowering of the strength of the single-faced corrugated cardboard and it is possible to enhance the shape-retaining properties of the heat exchange element. Moreover, by allowing the basis weight to be less than or equal to 100 $g/m^2$, the thickness is thinned and it is possible to lower the pressure loss at the time of being made into a heat exchange element.

The thickness of the corrugated sheet 1 is preferably greater than or equal to 50 $\mu$m, more preferably greater than or equal to 55 $\mu$m, further preferably greater than or equal to 60 $\mu$m, on the other hand, preferably less than or equal to 90 $\mu$m, more preferably less than or equal to 85 $\mu$m and further preferably less than or equal to 80 $\mu$m. By allowing the thickness to be greater than or equal to 50 $\mu$m, it is possible to suppress lowering of the strength of the single-faced corrugated cardboard and it is possible to enhance the shape-retaining properties of the heat exchange element. Moreover, by allowing the thickness to be less than or equal to 90 $\mu$m, it is possible to lower the pressure loss at the time of being made into a heat exchange element.

The single-faced corrugated cardboard 1 has at least a liner sheet 1 and a corrugated sheet 1.

Examples of a device for producing the single-faced corrugated cardboard 1 include a device composed of a pair of gear-shaped rolls which are engaged with each other to rotate while forming a shape of mountain-like parts of the corrugated sheet 1, a roll applying an adhesive on top portions of mountain-like parts of the corrugated sheet 1, and a press roll pressing a liner sheet against the corrugated sheet to which the adhesive is allowed to stick. Heat can be applied to a material through the gear-shaped roll and the press roll, and thus, depending on the material, the temperature thereof can be set to an appropriate temperature. Although the adhesive is not particularly limited, a vinyl acetate-based adhesive is preferred because the vinyl acetate-based adhesive is excellent in processability. Moreover, a functional agent such as a moisture absorbent, an antifungal agent, an antibacterial agent, a bacteriostatic agent and a flame retardant may also be contained.

In the single-faced corrugated cardboard 1, the height of the mountain-like part (height of flute) formed by a corrugated sheet 1 constituting the single-faced corrugated cardboard 1 is preferably higher than or equal to 1.0 mm, more preferably higher than or equal to 1.5 mm, further preferably higher than or equal to 2.0 mm, on the other hand, preferably lower than or equal to 4.0 mm, more preferably lower than or equal to 3.5 mm and further preferably lower than or equal to 3.0 mm. In this context, the height of flute is the height of a mountain-like part formed by a corrugated sheet 1 and refers to the length of a perpendicular line dropped from the apex of the mountain-like part formed by a corrugated sheet 1 to a plane of the liner sheet 1 with which the corrugated sheet 1 is brought into contact. By allowing the height of flute to be higher than or equal to 1.0 mm, the pressure loss of a heat exchange element is further lowered and the load on a blower of a heat exchanger is reduced. Moreover, by allowing the height of flute to be lower than or equal to 4.0 mm, in a certain size of a heat exchange element, it is possible to increase the number of pieces of the liner sheet and it is possible to further increase the effective area for temperature exchange and humidity exchange. Moreover, in the single-faced corrugated cardboard 1 used in the present invention, the distance between two adjacent mountain-like parts (pitch) formed by a corrugated sheet 1 constituting the single-faced corrugated cardboard 1 is preferably greater than or equal to 2.0 mm, more preferably greater than or equal to 2. 5 mm, further preferably greater than or equal to 3.0 mm, on the other hand, preferably less than or equal to 8.0 mm, more preferably less than or equal to 7.0 mm and further preferably less than or equal to 6.0 mm. In this context, the pitch is a distance between a mountain-like part and an adjacent mountain-like part and refers to a distance between the apex of a mountain-like part and the apex of an adjacent mountain-like part. By allowing the pitch to be greater than or equal to 2.0 mm, the number of mountain-like parts can be decreased, and whereby an area of the liner sheet on which an adhesive is applied is reduced and it is possible to heighten the temperature exchange efficiency and humidity exchange efficiency. Moreover, by allowing the pitch to be less than or equal to 8.0 mm, the strength of a heat exchange element against compression is heightened since the number of mountain-like parts is increased. With regard to the controlling methods for the height of flute and the pitch, the height of flute and the pitch can be adjusted according to the height of flute and the pitch of the gear-shaped roll.

It is necessary to allow the water vapor permeability of the liner sheet 2 used in the present invention to be greater than or equal to 80 $g/m^2\cdot$hr. The water vapor permeability of the liner sheet is involved in the humidity exchange efficiency when the liner sheet is used as a heat exchange element, and the higher the water vapor permeability becomes, the higher the humidity exchange efficiency becomes. The water vapor permeability is preferably greater than or equal to 85 $g/m^2$/hr and further preferably greater than or equal to 90 $g/m^2$/hr. When the water vapor permeability is less than 80 $g/m^2$/hr, there is a fear that the humidity exchange efficiency becomes less than 60% when the liner sheet is used as a heat exchange element. The humidity is easy to be felt by the body, and when the humidity exchange efficiency is less than 60%, highly humid outside air in the summer season moves to the inside of the room by ventilation and the air further gives a hot and humid feeling. The water vapor permeability of the liner sheet 2 can be adjusted by allowing the moisture absorbent to appropriately vary in the presence/absence or its content and allowing the liner sheet 2 to appropriately vary in its specific surface area, basis weight, thickness or density.

It is preferred that the liner sheet 2 be a sheet of nonwoven fabric or a porous film. Even among those, paper composed of wet nonwoven fabric or a porous film which has a high water vapor permeability and high gas shielding properties is more preferred.

Examples of the fiber used for paper include N pulp (softwood pulp), L pulp (hardwood pulp), bagasse, wheat straw, reeds, papyrus, bamboo, pulp, cotton, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon), carbon fibers, metal fibers, glass fibers and the like. These fibers may be used alone, but it is preferred that two or more kinds of fibers selected therefrom be included. Of these fibers, a combination of pulp and a thermoplastic resin fiber is more preferred, and further preferred is a combination of pulp and a nanofiber composed of a thermoplastic resin. By allowing the liner sheet to contain nanofibers, the specific surface area becomes large to heighten the water vapor permeability. In a heat exchange element, the inside thereof is partitioned into spaces different in water vapor partial pressure by the liner sheet. Water vapor moves by virtue of the water vapor partial pressure difference thereof. With regard to the mechanism enabling water vapor to move, water vapor is condensed on a liner sheet surface, is allowed to move through the inside of the sheet by the capillary phenomenon, is diffused at the sheet back face and is transferred from a space high in water vapor partial pressure to a space low in water vapor partial pressure. At this time, while condensation and diffusion are repeated, the specific surface area becomes large by using nanofibers, and the area where condensation and diffusion are performed is enlarged. Moreover, nanofibers intrude into slight clearances generated by allowing pulp fibers to overlap one another, and as a result, it is possible to further accelerate the capillary phenomenon. That is, the characteristic constitution in which nanofibers intrude into clearances formed by a part of fibrillated pulp is attained. Furthermore, the strength of the sheet in a wet state is not largely lowered since nanofibers are usually synthetic fibers. On that account, the sheet of paper enables a heat exchange element to maintain the stable dimensional stability over a long period of time.

However, nanofibers are difficult to be dispersed because the nanofibers are fine fibers having a diameter of a nanometer order. Furthermore, when nanofibers are mixed with densely fibrillated pulp, the dispersibility is further lowered and a small degree of twist is generated in the interface between the nanofiber and the pulp. Whereby, fine voids are generated and the carbon dioxide shielding rate is lowered.

As a countermeasure therefor, it is preferred that the liner sheet 2 have a two or more-layer paper constitution of a layer composed of pulp as a gas shielding layer and a layer containing nanofibers as a porous layer. Whereby, carbon dioxide is shielded by virtue of the gas shielding layer and the strength of paper which is processed to be made into a heat exchange element is maintained. Moreover, by virtue of the porous layer, it is possible to heighten the water vapor permeability. Furthermore, it is more preferred that the liner sheet 2 be a three-layer stacked body of a porous layer/a gas shielding layer/a porous layer.

With regard to the gas shielding layer, by subjecting pulp composed only of N pulp and L pulp to beating, fibers are highly fibrillated, the layer is allowed to have a dense structure, and gases such as carbon dioxide are easily shielded. Above all, it is more preferred that only N pulp be used. With regard to the N pulp, as compared to the L pulp, the fiber cross section has a flat shape, and allowing flat fibers to overlap one another creates an effect of easily filling clearances through which gases pass. The Canadian standard freeness of the pulp is preferably less than or equal to 150 ml, more preferably less than or equal to 120 ml and further preferably less than or equal to 90 ml. By allowing the pulp to be further beaten, voids between fibers are filled with fibrillated fibers and it is possible to shield the gas transmission. Moreover, when the pulp is excessively beaten, since the layer becomes a substantially nonporous layer to lower the water vapor permeability, and furthermore, the productivity at the time of being made into a multi-layer sheet shape is lowered, the Canadian standard freeness thereof is preferably greater than or equal to 10 ml, more preferably greater than or equal to 30 ml and further preferably greater than or equal to 50 ml.

The porous layer needs only to be a layer containing nanofibers, in view of papermaking properties, one formed from a mixture of pulp and nanofibers of a thermoplastic polymer is preferred. The ratio of nanofibers is preferably greater than or equal to 5% by mass, more preferably greater than or equal to 20% by mass and further preferably greater than or equal to 40% by mass. By allowing the ratio of nanofibers to be thus defined, the specific surface area becomes large, the capillary phenomenon is accelerated and the water vapor permeability is heightened. On the other hand, the ratio is preferably less than or equal to 90% by mass, more preferably less than or equal to 80% by mass and further preferably less than or equal to 70% by mass. By allowing the ratio of nanofibers to be less than or equal to 90% by mass, by virtue of nanofibers which are ultrafine fibers, the beating degree is lowered and it is possible to suppress significant lowering of the productivity. In this context, as the pulp, unlike highly fibrillated one used for the gas shielding layer, one with a Canadian standard freeness of greater than or equal to 150 ml is preferred in view of the function of the porous layer. When the beating degree of pulp is heightened and the pulp is highly fibrillated, a sheet begins to be made substantially nonporous, which is not desirable in the point of the water vapor permeability. The Canadian standard freeness thereof is preferably greater than or equal to 200 ml and further preferably greater than or equal to 300 ml.

The nanofiber referred to herein means the fiber having a fiber diameter at a nanometer (nm) level, and in more concrete terms, refers to the fiber with a number average fiber diameter of less than 1000 nm. Moreover, in more concrete terms, the number average fiber diameter of nanofibers is greater than or equal to 1 nm. With regard to the nanofiber, in the case where the fiber cross-section is a modified cross-section, which is not a circular cross-section, the fiber diameter is based on a fiber diameter calculated when the sectional shape is converted into a circular shape with the same area. From the viewpoint of capillary phenomenon acceleration, the number average fiber diameter of nanofibers is preferably less than or equal to 750 nm, more preferably less than or equal to 500 nm and further preferably less than or equal to 300 nm. Moreover, in view of balance with productivity, the number average fiber diameter is more preferably greater than or equal to 10 nm and further preferably greater than or equal to 100 nm.

From the viewpoints of easily absorbing water and the affinity with cellulose, it is preferred that the nanofiber be composed of nylon among thermoplastic resins, and it is further preferred that the nanofiber be composed of nylon 6. Moreover, it does not matter if the thermoplastic resin fiber is composed of a resin prepared by allowing a component other than nylon to undergo a copolymerization or mixing a component other than nylon. For example, the nanofiber can be produced by a method described in Japanese Patent Laid-open Publication No. 2005-299069 (paragraphs [0045] to [0057], paragraphs [0114] to [0117] and the like) or the like. Specifically, first, nylon 6 and polylactic acid are melt-kneaded by means of a twin screw type kneading extruder to obtain polymer alloy chips. Next, the polymer alloy chips are charged into a melt spinning machine for staple fiber provided with a single screw type extruder, melted and led to a spin block. And then, a polymer alloy melt is discharged from a spinneret, cooled and solidified, imparted with an oil solution, and then, withdrawn. The resulting undrawn yarns are doubled, and then, a draw heat treatment is performed to obtain tow of polymer alloy fibers. Next, the tow of polymer alloy fibers is treated with an aqueous sodium hydroxide solution to hydrolyze and remove polylactic acid, and neutralized with acetic acid, after which water washing and drying are performed to obtain a fiber bundle of nanofibers. Finally, the fiber bundle is cut to obtain nylon 6 nanofiber-short fibers.

As the resin constituting a porous film, any one of a polyolefin resin, a polycarbonate, a polyamide, a polyimide, a polyamide-imide, an aromatic polyamide, a fluorine-based resin and the like is acceptable, but a polyolefin resin is desirable from the viewpoints of heat resistance, forming properties, reduction in production costs and the like. Examples of a monomer component constituting the above-mentioned polyolefin resin include ethylene, propylene, 1-butene, 1-pentene, 3-methylpentene-1,3-methyl-1-butene, 1-hexene, 4-methyl-1-pentene, 5-ethyl-1-hexene, 1-heptene, 1-octene, 1-decene, 1-dodecene, 1-tetradecene, 1-hexadecene, 1-heptadecene, 1-octadecene, 1-eicosen, vinylcyclohexene, styrene, allylbenzene, cyclopentene, norbornene, 5-methyl-2-norbornene and the like, and examples of a polymer component constituting the above-mentioned polyolefin resin include a single polymer thereof, a copolymer of at least two or more kinds selected from the above-mentioned monomer components, a blend of these single polymers and copolymers, and the like, but the component is not limited thereto. Other than the above-mentioned monomer components, for example, it does not matter if vinyl alcohol, maleic anhydride and the like are allowed to undergo a copolymerization or a graft polymerization, but the component is not limited thereto. In particular, from the viewpoints of heat resistance, air permeability, porosity and the like, it is more desirable that the monomer component constituting the above-mentioned polyolefin resin be one or more kinds selected from the group consisting of ethylene and propylene, and of these, it is further desirable that the monomer component be composed mainly of propylene. In this context, being composed mainly means that the proportion occupied by a specific component in the whole component is greater than or equal to 50% by mass, more preferably greater than or equal to 80% by mass, further preferably greater than or equal to 90% by mass and most preferably greater than or equal to 95% by mass. By allowing the liner sheet to be porous, the specific surface area becomes large, the water vapor permeability is heightened, and a heat exchange element excellent in the humidity exchange efficiency is obtained. Furthermore, the strength of a porous film in a wet state is not largely lowered. On that account, the porous film enables a heat exchange element to maintain the stable dimensional stability over a long period of time.

The porous film has many numbers of fine through holes that penetrate between both surfaces of the film and have air permeability properties. As a method for forming through holes in the porous film, either of a wet process and a dry process is acceptable. Specifically, the wet process refers to the method of adopting a polyolefin resin as a matrix resin, adding a material to be extracted, which is extracted after made into a sheet, stirring the mixture, using a good solvent for the material to be extracted to extract only an additive, and thus generating voids in the matrix resin, and there have been proposed various methods. On the other hand, as the dry process, for example, there has been proposed a method of adopting low-temperature extrusion on melt extrusion and high draft ratio, controlling the lamellar structure in a film before drawing which has been made into a sheet, allowing this film to be uniaxially drawn to make cleavage occur in the lamellar interface, and thus forming voids (the so-called lamellar drawing method). Moreover, as the dry process, there has been also proposed a method of adding a large amount of inorganic particles or particles composed of a resin incompatible with polypropylene and the like which are matrix resins, forming a sheet, making cleavage occur in the interface between the particle and the polypropylene resin by drawing the sheet, and thus forming voids. Furthermore, there have been proposed a large number of methods, the so-called $\beta$-form crystallization methods, in which voids are formed by taking advantage of the difference in crystal density between the $\alpha$-type crystal ($\alpha$-crystal) and the (3-type crystal ($\beta$-crystal), which are crystal polymorphisms of polypropylene and the like, and the crystal transformation.

In order to form through holes in a film by using a β-form crystallization method, it is preferred that the β-crystal-forming capability of a porous film layer be greater than or equal to 40%. When the β-crystal-forming capability is less than 40%, the number of voids formed in a film by taking advantage of the transformation to the α-crystal is decreased since the amount of the β-crystal is small at the time of producing a film layer, and as a result, there is a case where only a film with low permeability is obtained. On the other hand, although the upper limit of the β-crystal-forming capability is not particularly limited, in order to allow the β-crystal-forming capability to be greater than 99.9%, it is necessary to add a large amount of a β-crystal nucleating agent described later and to extremely heighten the stereoregularity of the polypropylene resin used or the like, and the film is industrially less practicable because the film-forming stability is lowered and the like. The β-crystal-forming capability industrially preferably falls within the range of 65 to 99.9% and especially preferably falls within the range of 70 to 95%.

For the purpose of controlling the β-crystal-forming capability within a range of not less than 40%, a polypropylene resin with a high isotactic index and the like can be used, and as an additive, a crystallization nucleating agent, which is called a β-crystal nucleating agent and is added to a polypropylene resin to allow β-crystals to be selectively formed, can be used. Examples of the β-crystal nucleating agent preferably include an alkali or alkaline earth metal salt of a carboxylic acid such as calcium 1,2-hydroxystearate and magnesium succinate, an amide-based compound typified by N,N'-dicyclohexyl-2,6-naphthalene dicarboxyamide, a tetraoxaspiro compound such as 3,9-bis[4-(N-cyclohexylcarbamoyl)phenyl]-2,4,8,10-tetraoxas piro[5.5]undecane, an aromatic sulfonic acid compound such as sodium benzenesulfonate and sodium naphthalenesulfonate, an imide carboxylic acid derivative, a phthalocyanine-based pigment and a quinacridone-based pigment, and in particular, an amide-based compound disclosed in Japanese Patent Laid-open Publication No. 5-310665 can be preferably used. With regard to the addition amount of the β-crystal nucleating agent, for example, in the case of being based on the whole polypropylene resin, it is preferred that the addition amount fall within the range of 0.05 to 0.5% by mass and it is more preferred that the addition amount fall within the range of 0.1 to 0.3% by mass. When the addition amount is less than 0.05%, the formation of β-crystals becomes insufficient and there is a case where the air permeability properties of a porous film are lowered. When the addition amount is greater than 0.5% by mass, coarse voids are formed and there is a case where change in physical properties at the time of being coated with an organic solvent and dried becomes significant.

With regard to the polypropylene resin and the like constituting a porous film of the present invention, it is preferred that the melt flow rate (hereinafter, expressed as MFR, measurement condition of 230°C, 2.16 kg) thereof fall within the range of 2 to 30 g/10 minutes, and furthermore, it is preferred that the resin be an isotactic polypropylene resin or the like. When the MFR is greater than or equal to 2 g/10 minutes, the melt viscosity of the resin is lowered, high-precision filtration is easily performed, and the film grade is further enhanced. When the MFR is less than or equal to 30 g/10 minutes, the molecular weight does not become too low, it is possible to further suppress breakage of the film at the time of drawing and to further enhance the productivity. More preferably, the MFR falls within the range of 3 to 20 g/10 minutes.

Moreover, in the case of using an isotactic polypropylene resin, the isotactic index preferably falls within the range of 90 to 99.9% and more preferably falls within the range of 95 to 99%. When the isotactic index is greater than or equal to 90%, the resin has high crystallinity, whereby high air permeability properties can be attained.

In the case of using a polypropylene resin in the present invention, not to mention that a homopolypropylene resin can be used, from the viewpoints of stability and film formability in a film-forming process and uniformity of physical properties, a resin prepared by allowing polypropylene and an ethylene component or an α-olefin component such as butene, hexene and octene in an amount of less than or equal to 5% by mass, more preferably less than or equal to 2.5% by mass, to undergo a copolymerization can also be used. In this connection, with regard to the introduction form of the copolymerization component to polypropylene, either of a random copolymerization and a block copolymerization is acceptable.

Moreover, there is a case where allowing a high-molecular weight polypropylene to be contained in the above-mentioned polypropylene resin is preferred in the points of enhancement in barrier properties and enhancement in film-forming properties. The content thereof preferably falls within the range of 0.5 to 30% by mass. The high-molecular weight polypropylene refers to a polypropylene with an MFR of 0.1 to 1 g/10 minutes, and for example, the polypropylene resin D101 available from Sumitomo Chemical Company, Limited, the polypropylene resins E111G, B241 and E105GM available from Prime Polymer Co., Ltd., and the like can be used.

Moreover, allowing the above-mentioned polypropylene resin to be added with a low-molecular weight isotactic polypropylene with an MFR of greater than or equal to 70 g/10 minutes, preferably greater than or equal to 100 g/10 minutes and further preferably greater than or equal to 500 g/10 minutes, is preferred in the point of enhancement in water vapor transmission properties. Usually, a low-molecular weight isotactic polypropylene with an MFR of greater than or equal to 70 g/10 minutes is low in film-forming properties and has not been used in a field of films since the lowering in strength is caused. However, by allowing the low-molecular weight isotactic polypropylene in an amount of 0.1 to 20% by mass, preferably 1 to 10% by mass and further preferably 2 to 5% by mass, to be contained when the whole polypropylene resin is defined as 100% by mass, the small amount of the low-molecular weight polypropylene added enables the molecular chain terminal concentration to be heightened at the crystal interface, accelerates the hole formation at the crystal interface on lengthwise drawing, namely, serves as a hole-opening auxiliary agent, to cause uniform hole-opening, and allows the resulting film to have water vapor transmission properties while having barrier properties, and it is possible to achieve both characteristics contradictory to each other. Examples of a low-molecular weight isotactic polypropylene having the above-described nature include the polypropylene resins S10AL and S10CL commercially available from Prime Polymer Co. , Ltd., and the like.

In a polypropylene resin and the like forming the porous film of the present invention, within the range of not impairing the effect of the present invention, various additives such as an oxidation inhibitor, a heat stabilizer, a light stabilizer, a neutralizer, an antistatic agent, a lubricant composed of organic particles, furthermore, an antiblocking agent, a filler and an incompatible polymer may be contained. In particular, for the purpose of suppressing the oxidative degradation by the heat history of a polypropylene resin and the like, it is preferred that the polypropylene resin and the like be added with an oxidation inhibitor. Moreover, with regard to the addition amount of an oxidation inhibitor, for example, the oxidation inhibitor-addition amount is preferably less than or equal to 2 parts by mass, more preferably less than or equal to 1 part by mass and further preferably less than or equal to 0.5 parts by mass, relative to 100 parts by mass of the polypropylene resin.

With regard to a method for heightening the water vapor permeability of the porous film of the present invention, the water vapor permeability can be controlled by adjusting the addition amount of a β-crystal nucleating agent in the raw material and the crystallization temperature or adjusting the content of a low-molecular weight isotactic polypropylene in the raw material. For example, the water vapor permeability can be increased by allowing the addition amount of a β-crystal nucleating agent in the raw material to be further increased within the range of 0.05 to 0.5% by mass, heightening the crystallization temperature, or allowing a low-molecular weight isotactic polypropylene to be contained in the raw material within the range of 0.1 to 20% by weight when the whole raw material is defined as 100% by weight.

It is preferred that the liner sheet 2 used in the present invention contain a moisture absorbent. As the moisture absorbent, a halide, an oxide, a kind of salt, a hydroxide and the like can be used, and it is preferred that an alkali metal salt such as lithium chloride and an alkaline earth metal salt such as calcium chloride and magnesium chloride be used. Of these, lithium chloride and calcium chloride which have a high coefficient of water absorption are preferably used. Furthermore, lithium chloride which is capable of enhancing the humidity exchange efficiency with a smaller sticking amount thereof is most preferably used. Besides, the moisture absorbent may contain a urethane resin, polyvinyl alcohol, polyoxyethylene, polyethylene glycol, a polyoxyalkylene alkyl ether, sodium polyacrylsulfonate and the like. Furthermore, the moisture absorbent may also contain a functional agent such as an antifungal agent, an antibacterial agent, a bacteriostatic agent and a flame retardant.

The content of the moisture absorbent in the liner sheet 2 is preferably greater than or equal to 5% by mass, more preferably greater than or equal to 10% by mass, further preferably greater than or equal to 15% by mass, on the other hand, preferably less than or equal to 30% by mass, more preferably less than or equal to 25% by mass and further preferably less than or equal to 20% by mass, in the case where the liner sheet 2 containing no moisture absorbent is defined as 100% by mass. By allowing the hygroscopic material to be contained in an amount greater than or equal to 5% by mass, the water vapor permeability of the liner sheet 2 is heightened and the humidity exchange efficiency is further accelerated. On the other hand, by allowing the content of the moisture absorbent to be less than or equal to 30% by mass, it is possible to suppress lowering of the strength of the liner sheet 2 under a high humidity environment and to also enhance the adhesivity to an adhesive.

The basis weight of the liner sheet 2 is preferably greater than or equal to 5 g/m$^2$, more preferably greater than or equal to 15 g/m$^2$ and further preferably greater than or equal to 30 g/m$^2$. On the other hand, the basis weight is preferably less than or equal to 60 g/m$^2$, more preferably less than or equal to 50 g/m$^2$ and further preferably less than or equal to 40 g/m$^2$. By allowing the basis weight to be greater than or equal to the above lower limit, it is possible to enhance the strength of the liner sheet 2 and it is also possible to enhance the gas shielding properties by making the size of voids in the inside of the liner sheet small. Moreover, by allowing the basis weight to be less than or equal to the above upper limit, it is possible to lower the heat resistance value, and furthermore, it is possible to further enhance the temperature exchange efficiency and the humidity exchange efficiency since the water vapor permeability can be heightened.

The thickness of the liner sheet 2 is preferably greater than or equal to 10 μm, more preferably greater than or equal to 15 μm, further preferably greater than or equal to 20 μm, on the other hand, preferably less than or equal to 50 μm, more preferably less than or equal to 40 μm and further preferably less than or equal to 30 μm. By allowing the thickness to be greater than or equal to the above lower limit, it is possible to enhance the strength of the liner sheet 2 and it is also possible to enhance the gas blocking properties by making the size of voids in the inside of the liner sheet 2 small. Moreover, by allowing the thickness to be less than or equal to the above upper limit, it is possible to further lower the heat resistance value, and furthermore, it is possible to further enhance the temperature exchange efficiency and the humidity exchange efficiency since the water vapor permeability can be heightened. In particular, a porous film is preferred because the porous film maintains processability in a process allowing a film to be processed into a heat exchange element and a strength capable of withstanding the process even when the film is made into an extremely thin sheet with a thickness of less than or equal to 25 μm, and a heat exchange element more excellent in temperature exchange efficiency is obtained.

The density of the liner sheet 2 is preferably greater than or equal to 0. 3 g/cm$^3$, more preferably greater than or equal to 0.6 g/cm$^3$ and further preferably greater than or equal to 0.8 g/cm$^3$. On the other hand, the density is preferably less than or equal to 2.5 g/cm$^3$, more preferably less than or equal to 2.0 g/cm$^3$ and further preferably less than or equal to 1.5 g/cm$^3$. The air permeability greatly depends on the density, and by allowing the density to be greater than or equal to the above lower limit, it is possible to keep the size of voids in the inside of the liner sheet small and thus the air permeability is heightened. That is, high gas shielding properties can be attained. On the other hand, by allowing the density to be less than or equal to 2.5 g/cm$^3$, it is possible to suppress lowering of the water vapor permeability of the liner sheet 2 and to suppress lowering of the humidity exchange efficiency in the case where the liner sheet 2 is used for a heat exchange element.

With regard to the method for controlling the density of the liner sheet 2, for example, it is preferred that the liner sheet be subjected to consolidation with a calender device or a press device in which the liner sheet is pressed between rolls by means of a pair of rotating rolls or a plurality of rotating rolls. By performing the consolidation, it is possible to make the thickness of the liner sheet thin. Whereby, it is possible to lower the heat resistance value, and furthermore, it is possible to enhance the temperature exchange efficiency and the humidity exchange efficiency since the water vapor permeability can be heightened.

The air permeability of the liner sheet 2 is preferably greater than or equal to 100 seconds/100 ml, more preferably greater than or equal to 2,000 seconds/100 ml and further preferably greater than or equal to 3,000 seconds/100 ml. On the other hand, the air permeability is preferably less than or equal to 10,000 seconds/100 ml, more preferably less than or equal to 8,000 seconds/100 ml and further preferably less than or equal to 6,000 seconds/100 ml. By allowing the air permeability to be greater than or equal to the above lower limit, it is possible to make the size of voids in the inside of the liner sheet small and it is possible to enhance the gas shielding properties. The air permeability is considered to be involved in the gas shielding properties, the higher the air permeability becomes, the higher the gas shielding properties become, but the water vapor permeability is lowered. With regard to the method for controlling the air permeability of the liner sheet, the control can be performed by controlling the density of the liner sheet described above.

The carbon dioxide shielding rate of the liner sheet 2 is preferably greater than or equal to 2%, more preferably greater than or equal to 40% and further preferably greater than or equal to 60%. The carbon dioxide shielding rate serves as an index of gas shielding properties and affects the ventilation performance of a heat exchanger by which foul air in a room is exhausted to the outside of the room. A heat exchange element prepared with a liner sheet with a high carbon dioxide shielding rate has a high effective ventilation volume rate and is preferred because a heat exchanger prepared therewith has excellent ventilation performance.

A production method of paper capable of being used for the liner sheet 2 will be exemplified below. First, the constituent fiber such as pulp and nanofibers is beaten. Since the nanofiber has a large aspect ratio and two different fibers are easily entangled with each other, it is preferred that a dispersing agent, a penetrating agent and the like be used at the time of beating, and furthermore, nanofibers be separated from fibers such as pulp to be beaten. As a beating machine, a beater, a disc refiner, a deluxe finer, a jordan refiner, a grinder, a bead mill, a high-pressure homogenizer and the like can be used, and fibers can be dispersed by using those. In particular, for the purpose of enhancing the dispersibility of nanofibers, it is preferred that fibers be beaten with a disc refiner. Whereby, the water vapor permeability of the liner sheet is heightened, and a heat exchange element prepared therewith is allowed to have high humidity exchange efficiency. Moreover, it is preferred that respective constituent fibers be mixed just before the papermaking process. As a papermaking machine, a cylinder paper machine, a short wire cloth paper machine, a fourdrinier paper machine, a twin-wire paper machine, an on-top paper machine, a papermaking machine prepared by combining those machines, and the like can be used. Moreover, for the purpose of allowing nanofibers to be uniformly dispersed and disposed in the inside of a paper sheet, a papermaking machine having a dehydration function utilizing suction or the like is preferably used because partially uneven distribution of nanofibers can be suppressed in the inside of a paper sheet. After papermaking, by being subjected to supercalender processing or hot calender processing, it is possible to enhance the surface uniformity of paper and to reduce the thickness.

A specific example of the production method of the porous film used for the liner sheet 2 will be described. In this connection, the production method of the porous film in accordance with the present embodiment is not limited thereto.

In the case where the whole component as a polypropylene resin is defined as 100% by mass, 98.5% by mass of a homopolypropylene resin with an MFR of 7.5 g/10 minutes, 1% by weight of a low-molecular weight polypropylene resin with an MFR of 1,000 g/10 minutes, 0.3% by weight of N,N'-dicyclohexyl-2,6-naphthalene dicarboxyamide as a β-crystal nucleating agent and 0.2% by weight of an oxidation inhibitor are supplied as raw materials from weighing hoppers to a twin screw extruder so that those are mixed at this ratio to perform melt-kneading, discharged in a strand shape from a die, cooled and solidified by means of a water tank at 25°C and cut into a chip shape to prepare a polypropylene raw material (a). In this case, it is preferred that the melting temperature fall within the range of 280 to 310°C. By adopting the mixing ratio and the melting temperature, it is possible to make holes which a porous film has homogeneous.

Next, the raw material (a) is supplied to a single screw extruder, and melt extrusion is performed at 200 to 230°C. And then, foreign matters, a modified polymer and the like are removed by means of a filter inserted into the route of the polymer tube, after which the melt is discharged from a T die to a cast drum to obtain an undrawn laminated cast sheet. It is preferred that the surface temperature of the cast drum fall within the range of 105 to 130°C from the viewpoint of allowing the β-crystal fraction of the cast sheet to be controlled at a high level. In this case, since the formation of the end part of the sheet particularly affects the drawing properties attained later, it is preferred that a spot air be blown to the end part to bring the sheet into close contact with the drum. Moreover, depending on the close contact state of the whole sheet on the drum, air may be blown to the whole face thereof by means of an air knife as necessary.

Next, the resulting cast sheet is biaxially oriented to form empty holes in the film. As the method for allowing the cast sheet to be biaxially oriented, a sequential biaxial drawing method in which a film is drawn in the long-side direction and then in the width direction or a film is drawn in the width direction and then in the long-side direction, a simultaneous biaxial drawing method in which a film is drawn almost simultaneously in the long-side direction and width direction, or the like can be used, and from the viewpoints of water vapor transmission properties and carbon dioxide shielding properties, it is preferred that the sequential biaxial drawing method be adopted, and in particular, it is preferred that the film be drawn in the long-side direction and then in the width direction.

With regard to the specific drawing condition, first, it is good for the drawing temperature to be controlled to a temperature at which a cast sheet is drawn in the long-side direction. As the method for controlling the temperature, a method of using a temperature-controlled rotating roll, a method of using a hot air oven, or the like can be adopted. It is preferred that the drawing temperature in the long-side direction fall within the range of 90 to 140°C. By allowing the temperature to be higher than or equal to 90°C, it is possible to suppress breakage of a porous film and to obtain a porous film further excellent in carbon dioxide shielding properties. On the other hand, by allowing the temperature to be lower than or equal to 140°C, it is possible to obtain a porous film further excellent in water vapor transmission properties. The drawing temperature in the long-side direction more preferably falls within the range of 110 to 135°C and especially preferably falls within the range of 125 to 130°C. It is preferred that the draw ratio fall within the range of 3 to 7 times. By allowing the draw ratio to be greater than or equal to 3 times, it is possible to obtain a porous film further excellent in water vapor transmission properties. By allowing the draw ratio to be less than or equal to 7 times, it is possible to suppress breakage of a porous film and to obtain a porous film further excellent in carbon dioxide shielding properties. From the viewpoint of achieving both water vapor transmission properties and carbon dioxide shielding properties, the draw ratio more preferably falls within the range of 4.5 to 6 times.

Next, the film is grasped at the film end parts to be introduced into a tenter type drawing machine. The transverse drawing temperature preferably falls within the range of 130 to 160°C. By allowing the temperature to be higher than or equal to 130°C, it is possible to suppress breakage of a porous film and to obtain a porous film further excellent in carbon dioxide shielding properties. On the other hand, by allowing the temperature to be lower than or equal to 160°C, it is possible to obtain a porous film further excellent in water vapor transmission properties. From the viewpoint of achieving both water vapor transmission properties and carbon dioxide shielding properties, the temperature more preferably falls within the range of 140 to 155°C. It is preferred that the draw ratio in the width direction fall within the range of 4 to 15 times. By allowing the draw ratio to be greater than or equal to 4 times, it is possible to obtain a porous film further excellent in water vapor transmission properties. On the other hand, by allowing the draw ratio to be less than or equal to 15 times, it is possible to suppress breakage of a porous film to enhance the productivity, and it is possible to obtain a porous film further excellent in water vapor transmission properties. From the viewpoint of achieving both water vapor transmission properties and carbon dioxide shielding properties, the draw ratio more preferably falls within the range of 6 to 12 times and further preferably falls within the range of 8 to 11 times. In this connection, on this occasion, the transverse drawing speed preferably falls within the range of 500 to 10,000%/minute to perform drawing and more preferably falls within the range of 1,500 to 7,000%/minute. The area ratio (lengthwise draw ratio x transverse draw ratio) preferably falls within the range of 30 to 90 times.

Subsequently to the transverse drawing, a heat treatment process is performed in a tenter. In this context, from the viewpoint of controlling the water vapor transmission properties and the carbon dioxide shielding properties, it is preferred that the heat treatment process be divided into three zones of a heat fixation zone (hereinbelow, described as HS1 zone) where a heat treatment is performed while keeping the width after transverse drawing, a relaxation zone (hereinbelow, described as Rx zone) where a heat treatment is performed while making the width of the tenter narrow and allowing the film to relax, and a heat fixation zone (hereinbelow, described as HS2 zone) where a heat treatment is performed while keeping the width after relaxation.

It is preferred that the temperature of the HS1 zone fall within the range of 140 to 170°C. By allowing the temperature to be higher than or equal to 140°C, it is possible to obtain a porous film further excellent in carbon dioxide shielding properties. By allowing the temperature to be lower than or equal to 170°C, it is possible to suppress melting of the surface of a porous film and to obtain a porous film further excellent in water vapor transmission properties, furthermore, it is possible to suppress shrinkage of a porous film in the width direction, and it is possible to suppress breakage of a porous film in the HS1 zone and to enhance the productivity. From the viewpoint of simultaneously achieving all of water vapor transmission properties, carbon dioxide shielding properties and productivity, it is more preferred that the temperature fall within the range of 150 to 168°C.

It is preferred that the relaxation ratio at the Rx zone in the present invention fall within the range of 13 to 35%. When the relaxation ratio is greater than or equal to 13%, it is possible to obtain a porous film further excellent in carbon dioxide shielding properties and it is possible to suppress the heat shrinkage in the width direction of the porous film. When the relaxation ratio is less than or equal to 35%, it is possible to obtain a porous film further excellent in water vapor transmission properties and it is also possible to suppress the variation in physical properties. From the viewpoint of achieving both water vapor transmission properties and carbon dioxide shielding properties, it is more preferred that the relaxation ratio fall within the range of 15 to 25%.

It is preferred that the laxness speed at the Rx zone fall within the range of 100 to 1,000%/minute. When the laxness speed is greater than or equal to 100%/minute, it is possible to make the film-forming speed fast and to make the tenter length short and thus it is possible to further enhance the productivity. When the laxness speed is less than or equal to 1,000%/minute, the shrinking speed of a film becomes faster than the speed of narrowing the rail width of the tenter, and the enhancement in flatness of a porous film can be achieved by suppressing breakage of the porous film caused by flapping of the porous film in the tenter and suppressing irregularity thereof in the width direction. It is more preferred that the laxness speed fall within the range of 150 to 500%/minute.

It is preferred that the temperature of the HS2 zone fall within the range of 155 to 170°C. When the temperature of the Rx zone is higher than or equal to 155°C, the shrinkage stress for relaxation is lowered, and there is a case where the above-described high relaxation ratio cannot be achieved or the carbon dioxide shielding properties are lowered. When the temperature is higher than 170°C, there is a case where the polymer around the hole melts at a high temperature and the water vapor transmission properties are lowered. From the viewpoints of water vapor transmission properties and carbon dioxide shielding properties, it is more preferred that the temperature fall within the range of 160 to 168°C. With regard to the film after the heat fixation process, lug portions at which the film was grasped with clips of the tenter are removed by being slitten, and the film is wound around a core with a winder to prepare a product. By performing drawing and the relaxation treatment for the film within the range under these conditions, it is possible to obtain a porous film which is low in heat shrinkage and high in flatness of its film surface.

With regard to a method for allowing a moisture absorbent to stick to the liner sheet 2, the liner sheet 2 can be subjected to application such as coating and spraying or immersion processing such as dipping to allow the moisture absorbent to stick thereto.

As the corrugated sheet 2 used in the present invention, nonwoven fabric or a film is preferably used. Even among those, paper composed of wet nonwoven fabric with a high coefficient of moisture absorption is more preferably used.

Examples of the fiber used for paper include N pulp (softwood pulp), L pulp (hardwood pulp), bagasse, wheat straw, reeds, papyrus, bamboo, pulp, cotton, kenaf, roselle, cannabis, flax, ramie, jute, hemp, Sisal hemp, Manila hemp, palm, banana, thermoplastic resin fibers (fibers composed of thermoplastic resins such as polyethylene terephthalate (PET), polytrimethylene terephthalate (PTT), polybutylene terephthalate (PBT), polylactic acid (PLA), polyethylene naphthalate (PEN), a liquid crystal polyester, nylon 6 (N6), nylon 66 (N66), nylon 11 (N11), nylon 12 (N12), polyethylene (PE), polypropylene (PP) and polystyrene (PS)), regenerated fibers (viscose rayon, cuprammonium rayon), carbon fibers, metal fibers, glass fibers and the like. These fibers may be used alone, but two or more kinds of fibers selected therefrom may be included. In particular, more preferred is pulp (N pulp, L pulp) which is inexpensive.

The corrugated sheet 2 used in the present invention may also contain a functional agent such as an antifungal agent, an antibacterial agent, a bacteriostatic agent and a flame retardant.

The basis weight of the corrugated sheet 2 is preferably greater than or equal to 40 g/m$^2$, more preferably greater than or equal to 45 g/m$^2$, further preferably greater than or equal to 50 g/m$^2$, on the other hand, preferably less than or equal to 70 g/m$^2$, more preferably less than or equal to 65 g/m$^2$ and further preferably less than or equal to 60 g/m$^2$. By allowing the basis weight to be greater than or equal to the above lower limit, the strength of the single-faced corrugated cardboard is enhanced and it is possible to enhance the shape-retaining properties of the heat exchange element. Moreover, by allowing the basis weight to be less than or equal to the above upper limit, the thickness is thinned and it is possible to lower the pressure loss at the time of being made into a heat exchange element.

The thickness of the corrugated sheet 2 is preferably greater than or equal to 50 $\mu$m, more preferably greater than or equal to 55 $\mu$m, further preferably greater than or equal to 60 $\mu$m, on the other hand, preferably less than or equal to 90 $\mu$m, more preferably less than or equal to 85 $\mu$m and further preferably less than or equal to 80 $\mu$m. By allowing the thickness to be greater than or equal to the above lower limit, the strength of the single-faced corrugated cardboard is enhanced and it is possible to enhance the shape-retaining properties of the heat exchange element. Moreover, by allowing the thickness to be less than or equal to the above upper limit, it is possible to lower the pressure loss at the time of being made into a heat exchange element.

The single-faced corrugated cardboard 2 used in the present invention has at least a liner sheet 2 and a corrugated sheet 2.

Examples of a device for producing the single-faced corrugated cardboard 2 include a device composed of a pair of gear-shaped rolls which are engaged with each other to rotate while forming a shape of mountain-like parts of the corrugated sheet 2, a roll applying an adhesive on top portions of mountain-like parts of the corrugated sheet 2, and a press roll pressing a liner sheet against the corrugated sheet to which the adhesive is allowed to stick. Heat can be applied to a material through the gear-shaped roll and the press roll, and depending on the material, the temperature thereof can be set to an appropriate temperature. Although the adhesive is not particularly limited, a vinyl acetate-based adhesive is preferred because the vinyl acetate-based adhesive is excellent in processability. Moreover, a functional agent such as a moisture absorbent, an antifungal agent, an antibacterial agent, a bacteriostatic agent and a flame retardant may also be contained.

In the single-faced corrugated cardboard 2 used in the present invention, the height of mountain-like part (height of flute) formed by a corrugated sheet 2 constituting the single-faced corrugated cardboard 2 is preferably higher than or equal to 1.0 mm, more preferably higher than or equal to 1.5 mm, further preferably higher than or equal to 2.0 mm, on the other hand, preferably lower than or equal to 4.0 mm, more preferably lower than or equal to 3. 5 mm and further preferably lower than or equal to 3.0 mm. By allowing the height of flute to be lower than or equal to the above upper limit, in a certain size of a heat exchange element, it is possible to increase the number of pieces of the liner sheet and it is possible to further increase the effective area for temperature exchange and humidity exchange. Moreover, by allowing the height of flute to be higher than or equal to the above lower limit, the pressure loss of a heat exchange element is further lowered and the load on a blower of a heat exchanger is reduced.

Moreover, in the single-faced corrugated cardboard 2 used in the present invention, the distance between two adjacent mountain-like parts (pitch) formed by a corrugated sheet 2 constituting the single-faced corrugated cardboard 2 is preferably greater than or equal to 2.0 mm, more preferably greater than or equal to 2.5 mm, further preferably greater than or equal to 3.0 mm, on the other hand, preferably less than or equal to 8.0 mm, more preferably less than or equal to 7.0 mm and further preferably less than or equal to 6. 0 mm. By allowing the pitch to be less than or equal to the above upper limit, the strength of a heat exchange element against compression is heightened since the number of mountain-like parts is increased. By allowing the pitch to be greater than or equal to 2.0 mm, the number of mountain-like parts can be decreased, and whereby an area of the liner sheet on which an adhesive is applied is reduced and it is possible to heighten the temperature exchange efficiency and humidity exchange efficiency.

With regard to the controlling methods for the height of flute and the pitch, the height of flute and the pitch can be adjusted according to the height of flute and the pitch of the gear-shaped roll.

It is necessary to allow the heat exchange element used in the present invention to have a structure in which a piece of single-faced corrugated cardboard 1 and a piece of single-faced corrugated cardboard 2 are stacked. Whereby, a heat exchange element which is high in both the effective ventilation volume rate and the humidity exchange efficiency is obtained. Although the single-faced corrugated cardboard 1 having a liner sheet 1 with a carbon dioxide shielding rate of greater than or equal to 95% has high effective ventilation volume rate, the humidity exchange efficiency thereof is low since the water vapor permeability of the liner sheet 1 is low. On the other hand, although the single-faced corrugated cardboard 2 having a liner sheet 2 with a water vapor permeability of greater than or equal to 80 g/$m^2$·hr has high humidity exchange efficiency, the effective ventilation volume rate thereof is low since the liner sheet is low in the carbon dioxide shielding rate. Those are combined to complement respective faults in the whole heat exchange element, and a heat exchange element which is high in both the effective ventilation volume rate and the humidity exchange efficiency is obtained.

It is preferred that the area ratio of the liner sheet 2 in a heat exchange element fall within the range of 20 to 50%. By allowing the liner sheet 2 to have this area ratio, a heat exchange element which is high in both the effective ventilation volume rate and the humidity exchange efficiency is obtained. When the area of the liner sheet 2 is small, there is a tendency for the humidity exchange efficiency of a heat exchange element to be lowered. When the area of the liner sheet 2 is too large, there is a tendency for the effective ventilation volume rate of a heat exchange element to be lowered. The area ratio of the liner sheet 2 is more preferably greater than or equal to 25% and still further preferably greater than or equal to 30%. On the other hand, the area ratio is more preferably less than or equal to 45% and still further preferably less than or equal to 40%. In this context, the area ratio refers to a value obtained by dividing the total value of areas of respective liner sheets 2 of stacked pieces of single-faced corrugated cardboard 2 by the total value of areas of respective liner sheets 1 of stacked pieces of single-faced corrugated cardboard and respective liner sheets 2 of stacked pieces of single-faced corrugated cardboard 2 and multiplying the resulting value by 100.

With regard to the heat exchange element used in the present invention, it is preferred that the area ratio of the liner sheet 2 to the sum of areas of the liner sheet 1 and the liner sheet 2 in a portion from at least one face among two bottom faces which the heat exchange element has to a height position of 50% of a distance between the two bottom faces be greater than or equal to 40%. When the above-mentioned heat exchange element is assumed to be arranged in a heat exchanger described later so that the area ratio of the liner sheet 2 becomes greater than or equal to 40% in a portion from a heat exchange element bottom part, which is positioned apart from a suction opening of an air supply

14

multiblade blower, to a 50% position of the stack height of the heat exchange element, the flow velocity in a passage for air supply positioned at a place far from the suction opening of the air supply multiblade blower is slower than the flow velocity in a passage for air supply positioned at a place near thereto. By allowing a liner sheet 2 high in water vapor transmission properties to be arranged at a position where the flow velocity is relatively slow, the humidity is further easily transferred from one face to the other face and the humidity exchange efficiency is further heightened.

Hereinafter, a heat exchanger capable of effectively utilizing the heat exchange element in accordance with the present embodiment will be described.

First, the heat exchanger has the heat exchange element described above, an air supply blower and an air exhaust blower. The heat exchanger has an air supply suction opening, an air supply blowoff opening, an air exhaust suction opening and an air exhaust blowoff opening. The heat exchange element has a passage for air supply and a passage for air exhaust which are formed by allowing pieces of single-faced corrugated cardboard to be stacked.

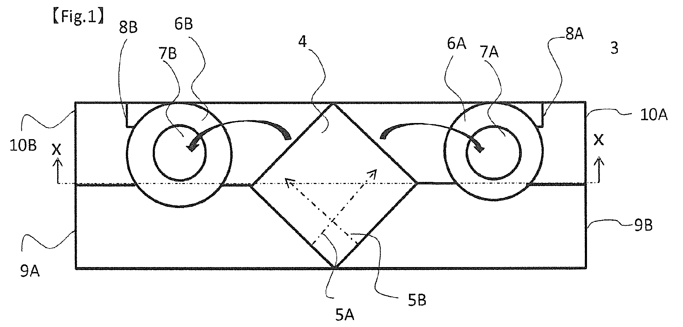

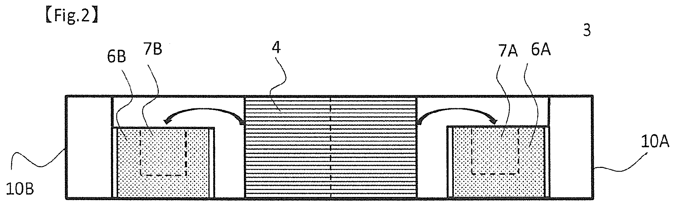

Fig. 1 is a plane perspective view showing a profile of a heat exchanger 3 in accordance with one embodiment. Fig. 2 is an X-X line sectional view of the heat exchanger 3 shown in Fig. 1. Pieces of single-faced corrugated cardboard of a heat exchange element 4 are stacked so that the direction of corrugated stripes of the corrugated sheet of a piece of single-faced corrugated cardboard is allowed to orthogonally cross with the direction of corrugated stripes of the corrugated sheet of an adjacent piece of single-faced corrugated cardboard. Consequently, a passage for air supply 5A and a passage for air exhaust 5B are formed in the heat exchange element. Air to be supplied is sucked from an air supply suction opening 9A of the heat exchanger, sucked, via the passage for air supply 5A of the heat exchange element 4, to an air supply multiblade blower suction opening 7A of an air supply multiblade blower 6A disposed at the downstream side, pushed out from an air supply multiblade blower blowoff opening 8A, and exhausted from an air supply blowoff opening 10A. On the other hand, air to be exhausted is sucked from an air exhaust suction opening 9B of the heat exchanger, sucked, via the passage for air exhaust 5B of the heat exchange element 4, to an air exhaust multiblade blower suction opening 7B of an air exhaust multiblade blower 6B disposed at the downstream side, pushed out from an air exhaust multiblade blower blowoff opening 8B, and exhausted from an air exhaust blowoff opening 10B.

It is preferred that the heat exchange element used for a heat exchanger in accordance with the present embodiment be arranged so that the area ratio of the liner sheet 2 becomes greater than or equal to 40% in a portion from a heat exchange element bottom part, which is positioned apart from a suction opening of an air supply multiblade blower, to a 50% position of the stack height of the heat exchange element. In a portion from a heat exchange element bottom part to a 50% position of the stack height of the heat exchange element, the area ratio of the liner sheet 2 is more preferably greater than or equal to 60% and further preferably greater than or equal to 80%.

The flow velocity in a passage for air supply positioned at a place far from the suction opening of the air supply multiblade blower is slower than the flow velocity in a passage for air supply positioned at a place near thereto. By allowing a liner sheet 2 high in water vapor transmission properties to be arranged at a position where the flow velocity is relatively slow, the humidity is further easily transferred from one face to the other face and thus the humidity exchange efficiency is further heightened. Moreover, the temperature is still further easily transferred from one face to the other face of the liner sheet as compared with the humidity. Thus, since the temperature exchange is sufficiently performed at either of a position where the wind velocity is relatively fast and a position where the wind velocity is relatively slow, the heat exchange element and the heat exchanger in which pieces of single-faced corrugated cardboard 1 and 2 are arranged as above are allowed to have excellent temperature exchange efficiency.

On the other hand, it is preferred that the heat exchange element be arranged so that the area ratio of the liner sheet 1 becomes greater than or equal to 50% in a portion from a heat exchange element bottom part, which is positioned apart from a suction opening of an air supply multiblade blower, to a 51 to 100% position of the stack height of the heat exchange element, and the area ratio thereof is more preferably greater than or equal to 60% and further preferably greater than or equal to 80%. By allowing a larger number of liner sheets 1 high in the carbon dioxide shielding rate to be stacked, it is possible to compensate for the performance of the liner sheet 2 low in the carbon dioxide shielding rate and to keep the effective ventilation volume rate of the heat exchange element high.

The heat exchange element is produced by allowing pieces of single-faced corrugated cardboard to be stacked. An adhesive is applied on top portions of mountain-like parts of pieces of single-faced corrugated cardboard, and corrugated stripe directions of plural pieces of single-faced corrugated cardboard are allowed to alternately cross one by one to be stacked. The intersection angle is preferably greater than or equal to 30° and less than or equal to 150°, and more preferably, corrugated stripe directions of the pieces are allowed to orthogonally cross (90°) with one another to be stacked. By allowing corrugated stripe directions of plural pieces of single-faced corrugated cardboard to orthogonally cross with one another, it is possible to reduce the pressure loss at the time of being made into a heat exchange element. Before being stacked or after being stacked, pieces of single-faced corrugated cardboard can be cut into a desired shape. Moreover, before being stacked or after being stacked, pieces of single-faced corrugated cardboard can be compressed to crush mountain-like parts. By lowering the height of the mountain-like part, it is possible to increase the number of pieces of the liner sheet, and thus it is possible to further increase the effective area for temperature exchange and humidity exchange. When pieces of single-faced corrugated cardboard are stacked, the heat exchange element has a form in which a corrugated sheet 1 or a corrugated sheet 2 is exposed at one bottom face, and a liner sheet or a flat sheet different therefrom in kind may be stacked on this corrugated sheet.

With regard to the shape of the heat exchange element, in the case where a face of a liner sheet is defined as its bottom face, the bottom face has a polygonal shape. That is, the heat exchange element has a polygonal columnar shape. The heat exchange element more preferably has a quadrangular columnar shape, and for example, the bottom face has a square shape, a rectangular shape, a parallelogram shape, a trapezoid shape, a rhombic shape or the like.

With regard to the size of one heat exchange element unit, in the case where a face of the liner sheet is defined as its bottom face, the longitudinal or transversal length of the bottom face is, with regard to the lower limit, preferably greater than or equal to 50 mm, more preferably greater than or equal to 100 mm, further preferably greater than or equal to 200 mm, with regard to the upper limit, preferably less than or equal to 2000 mm, more preferably less than or equal to 1000 mm and further preferably less than or equal to 500 mm. Moreover, the height of a stack thereof is, with regard to the lower limit, preferably greater than or equal to 50 mm, more preferably greater than or equal to 100 mm, further preferably greater than or equal to 200 mm, on the other hand, preferably less than or equal to 2000 mm, more preferably less than or equal to 1000 mm and further preferably less than or equal to 500 mm. When the longitudinal or transversal length or the height of a stack thereof is shorter/lower than the above lower limit, the area for exchange is reduced, and the temperature exchange efficiency and the humidity exchange efficiency are sometimes lowered significantly. When the longitudinal or transversal length or the height of a stack thereof is longer/higher than the above upper limit, the pressure loss is significantly heightened, the processability at the time of cutting a stacked body becomes poor, and the workability at the time of installing a heat exchange element in a heat exchanger becomes poor. This does not hold true in the case where a plurality of heat exchange elements are connected to be used.

The height of mountain-like part (height of flute) formed by a corrugated sheet constituting a heat exchange element is preferably higher than or equal to 1.0 mm, more preferably higher than or equal to 1.5 mm, further preferably higher than or equal to 2.0 mm, on the other hand, preferably lower than or equal to 4.0 mm, more preferably lower than or equal to 3.5 mm and further preferably lower than or equal to 3.0 mm.

By allowing the height of flute to be lower than or equal to 4.0 mm, in a certain size of a heat exchange element, it is possible to increase the number of pieces of the liner sheet, and thus it is possible to further increase the effective area for temperature exchange and humidity exchange. Moreover, by allowing the height of flute to be higher than or equal to 1.0 mm, the pressure loss of a heat exchange element is lowered and the load on a blower of a heat exchanger is reduced.

Moreover, the distance between two adjacent mountain-like parts (pitch) formed by a corrugated sheet constituting a heat exchange element is preferably greater than or equal to 2.0 mm, more preferably greater than or equal to 2.5 mm and further preferably greater than or equal to 3.0 mm. Moreover, on the other hand, the pitch is preferably less than or equal to 8.0 mm, more preferably less than or equal to 7.0 mm and further preferably less than or equal to 6.0 mm. By allowing the pitch to be less than or equal to the above upper limit, the strength of a heat exchange element against compression is heightened since the number of mountain-like parts is increased. By allowing the pitch to be greater than or equal to 2.0 mm, the number of mountain-like parts can be decreased, and whereby an area of the liner sheet on which an adhesive is applied is reduced and it is possible to heighten the temperature exchange efficiency and humidity exchange efficiency.

In an air heating condition, the temperature exchange efficiency of the heat exchange element is preferably greater than or equal to 80%, more preferably greater than or equal to 83% and further preferably greater than or equal to 85%. In this context, as the air heating condition, the outside air is allowed to have a temperature of 5°C and a humidity of 58%, and the return air is allowed to have a temperature of 20°C and a humidity of 51%. Moreover, in an air cooling condition, the humidity exchange efficiency is preferably greater than or equal to 60%, more preferably greater than or equal to 65% and further preferably greater than or equal to 70%. In this context, as the air cooling condition, the outside air is allowed to have a temperature of 35°C and a humidity of 64%, and the return air is allowed to have a temperature of 27°C and a humidity of 52%. By allowing the temperature exchange efficiency and the humidity exchange efficiency to be greater than or equal to 80% and 65% respectively, the heat exchanger is regarded as a high-performance type one in the heat exchanger industry. These values of exchange efficiency are defined as values measured at an air quantity of 150 m$^3$.

The effective ventilation volume rate of the heat exchange element is preferably greater than or equal to 90%, more preferably greater than or equal to 95% and further preferably greater than or equal to 97%. When the effective ventilation volume rate is less than 90%, it is not preferred because a part of foul air leaks within the ventilating device and returns to the inside of the room.

The pressure loss of the heat exchange element is preferably less than or equal to 80 Pa, more preferably less than or equal to 70 Pa and further preferably less than or equal to 60 Pa. By allowing the pressure loss to be less than or equal to 80 Pa, the load on a blower of a heat exchanger is reduced. Whereby, the ventilation possible volume capacity in a building can be increased in the case where heat exchangers performing the operation at the same air quantity are compared. Or, the blower can be made small in the case where heat exchangers performing the operation for the same ventilation volume are compared, and ventilation can be performed while achieving energy saving. The lower the pressure loss is, the more the heat exchanger is preferred. This pressure loss is defined as a value measured at an air quantity of 150 m$^3$. Examples of a method for controlling the pressure loss of a heat exchange element include a method of allowing the thicknesses of the liner sheet and the corrugated sheet to be thinned, a method of making the height of flute and the pitch of a heat exchange element constant, and a method of cutting a heat exchange element into sections without fluffing and unevenness.

The heat exchange element and the heat exchanger according to the present invention can be applied to all embodiments, and for example, can be utilized in applications such as building materials, members for vehicles, members for ships and members for electric/electronic parts.

EXAMPLES

Next, the heat exchange element according to the present invention will be described in detail with reference to examples.

[Measurement methods]

(1) Canadian standard freeness

The Canadian standard freeness was measured in accordance with JIS P8121 (1995) "Canadian Standard freeness testing method".

(2) Carbon dioxide shielding rate

To an opening part (20 cm x 20 cm) of a box with a width of 0.36 m, a length of 0.60 m and a height of 0.36 m (0.078 m$^3$), a test specimen (25 cm x 25 cm) was attached, carbon dioxide was injected so that the concentration thereof in the box becomes 8,000 ppm, and the carbon dioxide concentration (ppm) inside the box after 1 hour was measured to calculate the carbon dioxide shielding rate (%) by the following equation.

```
Carbon dioxide shielding rate (%) = {(Carbon dioxide

concentration inside box after 1 hour - Carbon dioxide concentration in outside air)/(Initial carbon dioxide

concentration inside box - Carbon dioxide concentration in

outside air)} × 100
```

(3) Water vapor permeability

The water vapor permeability was measured by a method of JIS Z0208 (1976) water vapor transmission rate (dish method). A cup used has a diameter of 60 mm and a depth of 25 mm. As test specimens, five circular pieces with a diameter of 70 mm were collected. The test specimens were treated for 1 hour with a dryer, the temperature of which was set to 80°C, and treated for 1 hour in a constant-temperature and constant-humidity chamber, the temperature and humidity of which were set to 20°C and 65% RH. Next, the test specimen was disposed in the cup containing calcium chloride for water content measurement (available from Wako Pure Chemical Industries, Ltd.), measured for the initial weight (T0), treated for 1 hour, 2 hours, 3 hours, 4 hours and 5 hours in a constant-temperature and constant-humidity chamber, the temperature and humidity of which were set to 20°C and 65% RH, and measured for the mass after treated (each of T1, T2, T3, T4 and T5). The water vapor permeability was determined by the equation below, and an average value of five pieces was defined as the value.

• Water vapor permeability $(g/m^2/hr) = \{[(T - T0)/T0) + ((T - T1)/T1) + ((T - T2)/T2) + ((T - T3)/T3) + ((T - T4)/T4) + ((T - T5)/T5)]/5\} \times 100$

(4) Air permeability

The air permeability was measured by a method of JIS P8117 (1998) air permeability (Gurley tester method). As test specimens, five pieces with a length of 150 mm and a width of 150 mm were collected. The test specimens were treated for 1 hour in a constant-temperature and constant-humidity chamber, the temperature and humidity of which were set to 23°C and 50% RH. Under an environment of a temperature of 23°C and a humidity of 50% RH, the test specimen was installed in a Gurley type densometer (model type G-B3C, Toyo Seiki Seisaku-sho, Ltd.), the time required for 100 ml of air to pass therethrough was measured, and an average value of five pieces was defined as the value (seconds/100 ml).

(5) Thickness

With regard to the thickness, three pieces of test specimens with a length of 200 mm and a width of 200 mm were collected from portions of a sample different from one another, allowed to stand for 24 hr at a temperature of 20°C and a humidity of 65% RH, and then, measured for thicknesses ($\mu$m) of five points of the center and four corners, respectively, with precision of 1 micron order using a measuring instrument (model type ID-112, available from Mitutoyo Corporation), and an average value thereof was defined as the value.

(6) Basis weight

The basis weight was measured by a method of JIS L1906 (2000) 5.2. Three pieces of test specimens with a length of 200 mm and a width of 250 mm were collected from portions of a sample different from one another, allowed to stand for 24 hours at a temperature of 20°C and a humidity of 65% RH, and then, weighed for the mass (g), respectively, and an average value thereof was expressed in terms of mass per 1 $m^2$, and the average value of three pieces was defined as the value.

(7) Number average fiber diameter of nanofiber

The number average fiber diameter of a nanofiber was determined as follows. A photograph of an aggregate of nanofibers photographed at 30,000 magnifications by a scanning electron microscope (S-3500N type available from Hitachi, Ltd.) is prepared, and using image processing software (WinROOF), 30 single fibers chosen at random in a sample of 5 mm square are measured for the diameter with precision of the nm unit to the first decimal place, and the measured value is rounded off to the nearest integer. Sampling was performed 10 times in total, the diameter data of respective 30 single fibers were collected, the diameter data of 300 single fibers in total were integrated, and then, a simple average value obtained by dividing the integrated value by the total number was defined as the number average fiber diameter.

(8) Temperature exchange efficiency and humidity exchange efficiency of heat exchange element

An air supply multiblade blower was attached to the downstream side of a passage for air supply of a heat exchange element and an air exhaust multiblade blower was attached to the downstream side of a passage for air exhaust of the heat exchange element to obtain a heat exchanger. Next, air to be introduced into a heat exchanger from the outside of a room (outside air), air to be introduced into the heat exchanger from the inside of the room (return air) and air to be supplied from the heat exchanger into the inside of the room (supply air) were measured for the temperature and humidity by a method specified in JIS B8628 (2003) to determine the temperature exchange efficiency and humidity exchange efficiency. In the measurement for the temperature and humidity, the temperature/humidity data logger ("Ondotori" (registered trademark) TR-71Ui available from T&D CORPORATION) was used. With regard to the location of the measurement for the temperature and humidity, the temperature and humidity were measured at a location apart from a heat exchange element by a distance of 30 cm. With regard to the air to be provided for the measurement, under the air cooling condition where the outside air is allowed to have a temperature of 35°C, a humidity of 64% RH and an air quantity of 150 $m^3$/hr and the return air is allowed to have a temperature of 27°C, a humidity of 52% RH and an air

quantity of 150 m$^3$/hr, the humidity exchange efficiency was determined. Moreover, under the air heating condition where the outside air is allowed to have a temperature of 5°C, a humidity of 58% RH and an air quantity of 150 m$^3$/hr and the return air is allowed to have a temperature of 20°C, a humidity of 51% RH and an air quantity of 150 m$^3$/hr, the temperature exchange efficiency was determined.

(9) Effective ventilation volume rate of heat exchange element

Air to be introduced into a heat exchanger from the inside of a room (return air) was allowed to have a carbon dioxide concentration of 8,000 ppm, and air to be introduced into the heat exchanger from the outside of the room (outside air) and air to be supplied from the heat exchanger into the inside of the room (supply air) were measured for the carbon dioxide concentration by a method specified in JIS B8628 (2003) to determine the effective ventilation volume rate by the equation below. In the measurement for the carbon dioxide concentration, a measuring instrument ("CO$_2$ measuring instrument testo 535" available from Testo AG) was used. With regard to the location of the measurement, the carbon dioxide concentration was measured at a location apart from a heat exchange element by a distance of 30 cm. With regard to the air to be provided for the measurement, the outside air was allowed to have a temperature of 20°C, a humidity of 50% RH and an air quantity of 150 m$^3$/hr and the return air was allowed to have a temperature of 20°C, a humidity of 50% RH and an air quantity of 150 m$^3$/hr.

$$\text{Effective ventilation volume rate (\%)} = (\text{Supply air-side carbon}$$
$$\text{dioxide concentration} - \text{Outside air-side carbon dioxide}$$
$$\text{concentration})/(\text{Return air-side carbon dioxide concentration}$$
$$- \text{Outside air-side carbon dioxide concentration}) \times 100$$

(10) Pressure loss of heat exchange element

With regard to the pressure loss, the difference in air quantity between outside air and supply air was measured by a pressure loss gauge at the time of measuring the temperature exchange efficiency and humidity exchange efficiency in (8) above, and an average value of those under an air cooling condition and an air heating condition was defined as the value.

(11) β-Crystal-forming capability

In an aluminum pan, a 5-mg portion of a porous film layer as a sample was placed and measured for the heat quantity of fusion by means of a differential scanning calorimeter (RDC220 available from Seiko Instruments Inc.). First, in the first run, the temperature was elevated at 10°C/minute from room temperature to 260°C under a nitrogen atmosphere and maintained for 10 minutes, after which cooled at 10°C/minute to 40°C. With regard to the melting peak observed at the time when the temperature is maintained for 5 minutes, and then, in the second run, the temperature is elevated again at 10°C/minute, a melting peak that exists within a temperature range of 145 to 157°C is defined as a β-crystal melting peak, a melting peak that appears in a temperature range of 158°C or higher is defined as an α-crystal melting peak, respective heat quantities of fusion are determined from the area of a region surrounded by a baseline drawn based on the flat section at the high temperature side and a peak, and when the heat quantity of fusion of an α-crystal and the heat quantity of fusion of a β-crystal are defined as ΔHα and ΔHβ respectively, the value calculated from the following equation is defined as the (3-crystal-forming capability. In this connection, the calibration of the heat quantity of fusion was performed with indium.

$$\beta\text{-Crystal-forming capability (\%)} = [\Delta H\beta/(\Delta H\alpha + \Delta H\beta)] \times 100$$

In this connection, by calculating the abundance ratio of the β-crystal in the same manner from the melting peak observed in the first run, it is possible to calculate the β-crystal fraction of a sample in the state.

(12) Melt flow rate (MFR)

The melt flow rate of a polypropylene resin is measured in accordance with the condition M (230°C, 2.16 kg) in JIS K 7210 (1995). The melt flow rate of a polyethylene resin is measured in accordance with the condition D (190°C, 2.16 kg) in JIS K 7210 (1995).

(13) Heat shrinkage

A porous film layer was cut into a square of 150 mm in the long-side direction x 150 mm in the widthwise direction to prepare a sample. Marked lines were drawn on central parts of respective sides of the sample to measure a distance L0 (width) between marked lines before heating. The sample was sandwiched between pieces of paper, hung down in a hot air oven heated to 140°C and allowed to settle for 2 minutes to be subjected to a heating treatment. After the heat treatment, the sample was allowed to cool, and then, measured for a distance L1 (width) between marked lines after heating, and the value calculated from the following equation was defined as the heat shrinkage. The measurement was performed 5 times per each sample, and an average value of measured values was defined as the heat shrinkage.

```
Heat shrinkage (%) = 100 - (L1 (width))/(L0 (width)) x
100
```

(Example 1)

A liner sheet 1A was obtained by the following method. Pulp constituted of 60% by mass of N pulp and 40% by mass of L pulp, in a concentration of 30 g per 10 L of water, was placed in a niagara beater for testing available from KUMAGAI RIKI KOGYO Co. , Ltd. and beaten to obtain pulp fibers with a Canadian standard freeness specified in JIS P8121 (1995) of 90 ml. Next, using a fourdrinier paper machine, base paper with a thickness of 57 $\mu$m and a basis weight of 40 g/m$^2$ was obtained. The obtained base paper was dipped in an aqueous lithium chloride solution, pressed with a mangle and dried with a heat roll to obtain a liner sheet 1A which is added with lithium chloride in an amount of 15% by mass and has a thickness of 60 $\mu$m and a basis weight of 46 g/m$^2$. With regard to the obtained liner sheet 1A, the carbon dioxide shielding rate was determined to be 99%, the water vapor permeability was determined to be 75 g/m$^2$/hr, and the air permeability was determined to be 28,741 seconds/100 ml.
A corrugated sheet 1A was obtained by the following method. A piece of bleached kraft paper as base paper with a thickness of 73 $\mu$m and a basis weight of 60 g/m$^2$ was purchased to prepare a corrugated sheet 1A.
A piece of single-faced corrugated cardboard 1A was obtained by the following method. The liner sheet 1A, the corrugated sheet 1A and an adhesive were used, and a piece of single-faced corrugated cardboard with a height of flute of 2.0 mm and a pitch of 4.8 mm was obtained by means of a single-faced corrugated cardboard manufacturing machine. As the adhesive, an ethylene-vinyl acetate copolymer emulsion (solid content of 50% by mass) was used.
A liner sheet 2A was obtained by the following method.

[Pulp fibers for gas shielding layer]

Pulp composed of N pulp, in a concentration of 30 g per 10 L of water, was placed in a niagara beater for testing available from KUMAGAI RIKI KOGYO Co. , Ltd. and beaten to obtain pulp fibers for a gas shielding layer with a Canadian standard freeness specified in JIS P8121 (1995) of 140 ml.

[Nanofibers/pulp fibers for porous layer]

First, nanofibers were obtained by the following method. Using a twin screw type kneading extruder, 40% by mass of nylon 6 with a melting point of 220°C and 60% by mass of poly-L-lactic acid with a melting point of 170°C (optical purity of 99.5% or more) were melt-kneaded at a temperature of 220°C to obtain polymer alloy chips.
The above-mentioned polymer alloy chips were charged into a melt spinning machine for staple fiber provided with a single screw type extruder, melted at a temperature of 235°C and led to a spin block. And then, a polymer alloy melt was filtered through metal nonwoven fabric with an ultrafiltration diameter of 15 $\mu$m, and discharged at a spinning temperature of 235°C from a spinneret that has a discharge hole with a hole diameter of 0.3 mm and allows the temperature on a spinneret face to be set to 215°C. The discharged linear molten polymer was cooled and solidified by cooling air, imparted with an oil solution and withdrawn at a spinning speed of 1350 m/minute. The obtained undrawn yarns were doubled, and then, subjected to a draw heat treatment at a drawing temperature of 90°C, a draw ratio of 3.04 times and a thermosetting temperature of 130°C to obtain tow of polymer alloy fibers with a single filament fineness of 3.0 dtex and a total fineness of five hundred thousand dtex. With regard to the obtained polymer alloy fiber, the strength was determined to be 3.4 cN/dtex and the elongation degree was determined to be 45%. The tow of the above-mentioned polymer alloy fibers was immersed for 1 hour in an aqueous 5% sodium hydroxide solution kept at a temperature of 95°C to hydrolyze and remove the poly-L-lactic acid component in the polymer alloy fiber (subject the poly-L-lactic acid component in the polymer alloy fiber to a sea component removal treatment). Then, the tow was neutralized with acetic acid, washed with water and dried to obtain a fiber bundle of nanofibers, and this fiber bundle of nanofibers was cut into a length of 1 mm. The cut fibers thus obtained in a concentration of 30 g per 10 L of water were placed in a niagara beater for testing available from KUMAGAI RIKI KOGYO Co., Ltd. and preliminarily beaten for 5 minutes, and the water was drained to recover the fibers. Then, this recovery was placed in a disc refiner and beaten to obtain nanofibers for a porous layer. The fiber diameter of the obtained nanofiber falls within the range of 110 to 180 nm, and the number average fiber diameter was determined to be 150 nm.

Next, pulp composed of N pulp, in a concentration of 30 g per 10 L of water, was placed in a niagara beater for testing available from KUMAGAI RIKI KOGYO Co. , Ltd. and beaten to obtain pulp fibers for a porous layer with a Canadian standard freeness specified in JIS P8121 (1995) of 400 ml.

In a niagara beater for testing available from KUMAGAI RIKI KOGYO Co. , Ltd. , 60% by mass of the nanofibers for a porous layer and 40% by mass of pulp fibers for a porous layer were placed to be mixed with each other.

[Liner sheet 2A]

Pulp fibers for a gas shielding layer and nanofibers/pulp fibers for a porous layer obtained as above were prepared at papermaking sections respectively and subjected to multilayer papermaking using a cylinder paper machine, and base paper with a thickness of 42 $\mu$m and a total basis weight of 40 g/m$^2$ constituted of a gas shielding layer with a basis weight of 30 g/m$^2$ and a porous layer with a basis weight of 10 g/m$^2$ was obtained.

The obtained base paper was dipped in an aqueous lithium chloride solution, pressed with a mangle and dried with a heat roll to obtain a liner liner sheet 2A which is added with lithium chloride in an amount of 5% by mass and has a thickness of 55 $\mu$m and a basis weight of 46 g/m$^2$. With regard to the obtained liner sheet 2A, the carbon dioxide shielding rate was determined to be 50%, the water vapor permeability was determined to be 91 g/m$^2$/hr, and the air permeability was determined to be 5,348 seconds/100 ml.

A corrugated sheet 2A was obtained by the following method. A piece of bleached kraft paper as base paper with a thickness of 73 $\mu$m and a basis weight of 60 g/m$^2$ was purchased to prepare a corrugated sheet 2A.

A piece of single-faced corrugated cardboard 2A was obtained by the following method. The liner sheet 2A, the corrugated sheet 2A and an adhesive were used, and a piece of single-faced corrugated cardboard with a height of flute of 2. 0 mm and a pitch of 4.8 mm was obtained by means of a single-faced corrugated cardboard manufacturing machine. As the adhesive, an ethylene-vinyl acetate copolymer emulsion (solid content of 50% by mass) was used.

On top portions of mountain-like parts of the corrugated sheets in the single-faced corrugated cardboard 1A and single-faced corrugated cardboard 2A, an adhesive was applied, 40 pieces of single-faced corrugated cardboard 2A were stacked so that corrugated stripe directions of respective two adjacent pieces were allowed to orthogonally cross with each other, and 60 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2A of the heat exchange element was 60% : 40% in the whole heat exchange element, 20% : 80% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. The temperature exchange efficiency (air heating condition), the humidity exchange efficiency (air cooling condition), the pressure loss and the effective ventilation volume rate of the obtained heat exchange element were determined to be 83%, 70%, 74 Pa and 92%, respectively. Moreover, the height of flute and the pitch of the corrugated sheet in the heat exchange element were determined to be 2.0 mm and 4.8 mm, respectively. The results are shown in Table 1.

(Example 2)

The liner sheet 1A, the corrugated sheet 1A, the single-faced corrugated cardboard 1A, the liner sheet 2A, the corrugated sheet 2A and the single-faced corrugated cardboard 2A of Example 1 were used.

On top portions of mountain-like parts of the corrugated sheets in the single-faced corrugated cardboard 1A and single-faced corrugated cardboard 2A, an adhesive was applied, firstly, 50 pieces of single-faced corrugated cardboard 2A were stacked so that corrugated stripe directions of respective two adjacent pieces were allowed to orthogonally cross with each other, and 50 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2A of the heat exchange element was 60% : 40% in the whole heat exchange element, 0% : 100% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger. The temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 82%, 72%, 74 Pa and 92%, respectively. Moreover, the height of flute and the pitch of the corrugated sheet in the heat exchange element were determined to be 2.0 mm and 4.8 mm, respectively. The results are shown in Table 1.

(Example 3)

A liner sheet 1A, a corrugated sheet 1A, single-faced corrugated cardboard 1A, a liner sheet 2A, a corrugated sheet 2A and single-faced corrugated cardboard 2A which are the same as those in Example 1 were used.

On top portions of mountain-like parts of the corrugated sheets in the single-faced corrugated cardboard 1A and single-faced corrugated cardboard 2A, an adhesive was applied, firstly, 20 pieces of single-faced corrugated cardboard 2A were stacked so that corrugated stripe directions of respective two adjacent pieces were allowed to orthogonally cross with each other, and 80 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2A of the heat exchange element was 80% : 20% in the whole heat exchange element, 60% : 40% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 82%, 67%, 75 Pa and 96%, respectively. Moreover, the height of flute and the pitch of the corrugated sheet in the heat exchange element were determined to be 2.0 mm and 4.8 mm, respectively. The results are shown in Table 1.

(Example 4)

A liner sheet 1A, a corrugated sheet 1A, single-faced corrugated cardboard 1A, a liner sheet 2A, a corrugated sheet 2A and single-faced corrugated cardboard 2A which are the same as those in Example 1 were used.

On top portions of mountain-like parts of the corrugated sheets in the single-faced corrugated cardboard 1A and single-faced corrugated cardboard 2A, an adhesive was applied, firstly, 80 pieces of single-faced corrugated cardboard 1A were stacked so that corrugated stripe directions of respective two adjacent pieces were allowed to orthogonally cross with each other, and 20 pieces of single-faced corrugated cardboard 2A were stacked thereon to prepare a heat exchange element of 400 mm in longitudinal length by 400 mm in transversal length by 200 mm in height. The area ratio of the liner sheet 1A and the liner sheet 2A of the heat exchange element was 80% : 20% in the whole heat exchange element, 100% : 0% in the portion of a heat exchange element height of 0 to 50%, and 60% : 40% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 82%, 61%, 75 Pa and 96%, respectively. Moreover, the height of flute and the pitch of the corrugated sheet in the heat exchange element were determined to be 2.0 mm and 4.8 mm, respectively. The results are shown in Table 1.

(Example 5)

The liner sheet 1A, the corrugated sheet 1A, the single-faced corrugated cardboard 1A, the liner sheet 2A, the corrugated sheet 2A and the single-faced corrugated cardboard 2A of Example 1 were used.

On top portions of mountain-like parts of the corrugated sheets in the single-faced corrugated cardboard 1A and single-faced corrugated cardboard 2A, an adhesive was applied, 10 pieces of single-faced corrugated cardboard 2 were stacked so that corrugated stripe directions of respective two adjacent pieces were allowed to orthogonally cross with each other, and 90 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2A of the heat exchange element was 90% : 10% in the whole heat exchange element, 80% : 20% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 81%, 62%, 75 Pa and 97%, respectively. Moreover, the height of flute and the pitch of the corrugated sheet in the heat exchange element were determined to be 2.0 mm and 4.8 mm, respectively. The results are shown in Table 1.

(Example 6)

The liner sheet 1A, the corrugated sheet 1A, the single-faced corrugated cardboard 1A, the liner sheet 2A, the corrugated sheet 2A and the single-faced corrugated cardboard 2A of Example 1 were used.

On top portions of mountain-like parts of the corrugated sheets in the single-faced corrugated cardboard 1A and single-faced corrugated cardboard 2A, an adhesive was applied, 60 pieces of single-faced corrugated cardboard 2A were stacked so that corrugated stripe directions of respective two adjacent pieces were allowed to orthogonally cross with each other, and 40 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2A of the heat exchange element was 40% : 60% in the whole heat exchange element, 0% : 100% in the portion of a heat exchange element height of 0 to 50%, and 80% : 20% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 83%, 72%, 75 Pa and 87%, respectively. Moreover, the height of flute and the pitch of the corrugated sheet in the heat exchange element were determined to be 2.0 mm and 4.8 mm, respectively. The results are shown in Table 2.

(Example 7)

Pulp constituted of 60% by mass of N pulp and 40% by mass of L pulp, in a concentration of 30 g per 10 L of water, was placed in a niagara beater for testing available from KUMAGAI RIKI KOGYO Co., Ltd. and beaten to obtain pulp fibers with a Canadian standard freeness specified in JIS P8121 (1995) of 50 ml. Next, using a fourdrinier paper machine, base paper with a thickness of 58 $\mu$m and a basis weight of 40 $g/m^2$ was obtained. The obtained base paper was dipped in an aqueous lithium chloride solution, pressed with a mangle and dried with a heat roll to obtain a liner sheet 1B which is added with lithium chloride in an amount of 15% by mass and has a thickness of 60 $\mu$m and a basis weight of 46 $g/m^2$. With regard to the obtained liner sheet 1B, the carbon dioxide shielding rate was determined to be 99%, the water vapor permeability was determined to be 72 $g/m^2/hr$, and the air permeability was determined to be 40, 322 seconds/100 ml.

A piece of single-faced corrugated cardboard 1B was obtained by the following method.

The liner sheet 1B, the corrugated sheet 1A of Example 1 and an adhesive were used to obtain a piece of single-faced corrugated cardboard with a height of flute of 2.0 mm and a pitch of 4.8 mm by means of a single-faced corrugated cardboard manufacturing machine. As the adhesive, an ethylene-vinyl acetate copolymer emulsion (solid content of 50% by mass) was used.

Moreover, the liner sheet 2A, the corrugated sheet 2A and the single-faced corrugated cardboard 2A of Example 1 were used.

A heat exchange element was prepared in the same manner as that in Example 3 from the single-faced corrugated cardboard 1B and the single-faced corrugated cardboard 2A. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 81%, 65%, 75 Pa and 98%, respectively. Moreover, the height of flute and the pitch of the corrugated sheet in the heat exchange element were determined to be 2.0 mm and 4.8 mm, respectively. The results are shown in Table 2.

(Example 8)

Pulp constituted of 60% by mass of N pulp and 40% by mass of L pulp, in a concentration of 30 g per 10 L of water, was placed in a niagara beater for testing available from KUMAGAI RIKI KOGYO Co., Ltd. and beaten to obtain pulp fibers with a Canadian standard freeness specified in JIS P8121 (1995) of 50 ml. Next, using a fourdrinier paper machine, base paper with a thickness of 58 $\mu$m and a basis weight of 40 g/m$^2$ was obtained. The obtained base paper was dipped in an aqueous lithium chloride solution, pressed with a mangle and dried with a heat roll to obtain a liner sheet 1C which is added with lithium chloride in an amount of 15% by mass and has a thickness of 60 $\mu$m and a basis weight of 46 g/m$^2$. With regard to the obtained liner sheet 1C, the carbon dioxide shielding rate was determined to be 98%, the water vapor permeability was determined to be 77 g/m$^2$/hr, and the air permeability was determined to be 21,873 seconds/100 ml.

A piece of single-faced corrugated cardboard 1C was obtained by the following method.

The liner sheet 1C, the corrugated sheet 1A of Example 1 and an adhesive were used to obtain a piece of single-faced corrugated cardboard with a height of flute of 2.0 mm and a pitch of 4.8 mm by means of a single-faced corrugated cardboard manufacturing machine. As the adhesive, an ethylene-vinyl acetate copolymer emulsion (solid content of 50% by mass) was used.

The liner sheet 2A, the corrugated sheet 2A and the single-faced corrugated cardboard 2A of Example 1 were used.

On top portions of mountain-like parts of the corrugated sheets in the single-faced corrugated cardboard 1C and single-faced corrugated cardboard 2A, an adhesive was applied, firstly, 20 pieces of single-faced corrugated cardboard 2A were stacked so that corrugated stripe directions of respective two adjacent pieces were allowed to orthogonally cross with each other, and 80 pieces of single-faced corrugated cardboard 1C were stacked thereon to prepare a heat exchange element of 400 mm in longitudinal length by 400 mm in transversal length by 200 mm in height. The area ratio of the liner sheet 1C and the liner sheet 2A of the heat exchange element was 80% : 20% in the whole heat exchange element, 60% : 40% in the portion of a heat exchange element height of 0 to 50%, and 100% : 0% in the portion of a heat exchange element height of 51 to 100%.

An air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 82%, 68%, 75 Pa and 95%, respectively. Moreover, the height of flute and the pitch of the corrugated sheet in the heat exchange element were determined to be 2.0 mm and 4.8 mm, respectively. The results are shown in Table 2.

(Example 9)

To a twin screw extruder, 96.5 parts by mass of homopolypropylene F143H available from Prime Polymer Co., Ltd. of MFR = 4.0 g/10 minutes and 3 parts by mass of homopolypropylene S10CL available from Prime Polymer Co., Ltd. of MFR = 1,000 g/10 minutes as polypropylene resins, 0.3 part by mass of N,N'-dicyclohexyl-2,6-naphthalene dicarboxyamide (NU-100 available from New Japan Chemical Co., Ltd.) which is a $\beta$-crystal nucleating agent, and furthermore, respective 0.1 part by mass-portions of IRGANOX 1010 and IRGAFOS 168 available from Ciba Japan K.K. which are oxidation inhibitors were supplied as raw materials from weighing hoppers so as to be mixed at this ratio, subjected to melt-kneading at 303°C, discharged in a strand shape from a die, cooled and solidified by means of a water tank at 25°C and cut into a chip shape to obtain a polypropylene composition A.

The obtained polypropylene composition A was supplied to a single-screw melt extruder, melt extrusion was performed at 220°C and foreign matters were removed by means of a 60 μm-cut sintered filter, after which the composition was discharged into a cast drum, the surface temperature of which was controlled to 117°C, by means of a T die to obtain a cast sheet. Then, preheating was performed using a ceramic roll heated to 125°C, and drawing was performed at a draw ratio of 5 times in the long-side direction of a film. Next, the film was grasped with clips at the end parts to be introduced into a tenter type drawing machine, preheated for 3 seconds at 152°C, and then, drawn at a drawing speed of 3,500%/minute by 9.0 times at 150°C. In this connection, the distance between clips in the widthwise direction at an introduction port of the tenter was 150 mm.

In a subsequent heat treatment process, the film was heat-treated for 3 seconds at 150°C while keeping a distance between clips after drawing (HS1 zone), furthermore, a relaxation was performed at a relaxation ratio of 15% at 164°C (Rx zone), and a heat treatment was performed for 5 seconds at 164°C while keeping a distance between clips after relaxation (HS2 zone).

Afterward, lug portions at which the film was grasped with tenter clips were removed by being slitten, a porous film with a width of 500 mm was wound around a core by 500 m with a winder, and the porous film with a width of 500 mm, a thickness of 20 μm and a basis weight of 7 g/m$^2$ was obtained. With regard to the obtained porous film, the carbon dioxide shielding rate was determined to be 3%, the water vapor permeability was determined to be 101 g/m$^2$/hr, and the air permeability was determined to be 201 seconds/100 ml, and this film was used as a liner sheet 2B.

A piece of single-faced corrugated cardboard 2B was obtained by the following method. The liner sheet 2B, the corrugated sheet 2A of Example 1 and an adhesive were used to obtain a piece of single-faced corrugated cardboard 2B with a height of flute of 2.0 mm and a pitch of 4.8 mm by means of a single-faced corrugated cardboard manufacturing machine. As the adhesive, an ethylene-vinyl acetate copolymer emulsion (solid content of 50% by mass) was used.

The liner sheet 1A, the corrugated sheet 1A and the single-faced corrugated cardboard 1A of Example 1 were used.

On top portions of mountain-like parts of the corrugated sheets in the single-faced corrugated cardboard 1A and single-faced corrugated cardboard 2B, an adhesive was applied, firstly, 20 pieces of single-faced corrugated cardboard 2B were stacked so that corrugated stripe directions of respective two adjacent pieces were allowed to orthogonally cross with each other, and 80 pieces of single-faced corrugated cardboard 1 were stacked thereon to prepare a heat exchange element of 400 mm in longitudinal length by 400 mm in transversal length by 200 mm in height. The area ratio of the liner sheet 1A and the liner sheet 2B of the heat exchange element was 80% : 20% in the whole heat exchange element, 60% : 40% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 86%, 75%, 69 Pa and 90%, respectively. Moreover, the height of flute and the pitch of the corrugated sheet in the heat exchange element were determined to be 2.0 mm and 4.8 mm, respectively. The results are shown in Table 2.

(Example 10)

Preheating was performed using a ceramic roll heated to 125°C in the drawing process of Example 9, and drawing was performed at a draw ratio of 5 times in the long-side direction of a film. Next, the film was grasped with clips at the end parts to be introduced into a tenter type drawing machine, preheated for 3 seconds at 152°C, and then, drawn at a drawing speed of 4,500%/minute by 9.0 times at 150°C. Other than that, a porous film with a width of 500 mm, a thickness of 18 μm and a basis weight of 8 g/m$^2$ was obtained under the same condition as that in Example 9. With regard to the obtained porous film, the carbon dioxide shielding rate was determined to be 6%, the water vapor permeability was determined to be 80 g/m$^2$/hr, and the air permeability was determined to be 2,088 seconds/100 ml, and this film was used as a liner sheet 2C.

A piece of single-faced corrugated cardboard 2C was obtained by the following method. The liner sheet 2C, the corrugated sheet 2A of Example 1 and an adhesive were used to obtain a piece of single-faced corrugated cardboard with a height of flute of 2.0 mm and a pitch of 4.8 mm by means of a single-faced corrugated cardboard manufacturing machine. As the adhesive, an ethylene-vinyl acetate copolymer emulsion (solid content of 50% by mass) was used.

The liner sheet 1A, the corrugated sheet 1A and the single-faced corrugated cardboard 1A of Example 1 were used.

On top portions of mountain-like parts of the corrugated sheets in the single-faced corrugated cardboard 1A and single-faced corrugated cardboard 2C, an adhesive was applied, firstly, 20 pieces of single-faced corrugated cardboard 2C were stacked so that corrugated stripe directions of respective two adjacent pieces were allowed to orthogonally cross with each other, and 80 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2C of the heat exchange element was 80% : 20% in the whole heat exchange element, 60% : 40% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 86%, 65%, 69 Pa and 91%, respectively. Moreover, the height of flute and the pitch of the corrugated sheet in the heat exchange element were determined to be 2.0 mm and 4.8 mm, respectively. The results are shown in Table 2.

(Comparative Example 1)

The liner sheet 1A, the corrugated sheet 1A and the single-faced corrugated cardboard 1A of Example 1 were used.
On top portions of mountain-like parts of the corrugated sheet in the single-faced corrugated cardboard 1A, an adhesive was applied, 100 pieces of single-faced corrugated cardboard 1 were stacked so that corrugated stripe directions of respective two adjacent pieces were allowed to orthogonally cross with each other to prepare a heat exchange element of 400 mm in longitudinal length by 400 mm in transversal length by 200 mm in height. An air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 80%, 59%, 75 Pa and 98%, respectively. Moreover, the height of flute and the pitch of the corrugated sheet in the heat exchange element were determined to be 2.0 mm and 4.8 mm, respectively. The results are shown in Table 3.

(Comparative Example 2)

The liner sheet 2A, the corrugated sheet 2A and the single-faced corrugated cardboard 2A of Example 1 were used.
On top portions of mountain-like parts of the corrugated sheet in the single-faced corrugated cardboard 2A, an adhesive was applied, 100 pieces of single-faced corrugated cardboard 2 were stacked so that corrugated stripe directions of respective two adjacent pieces were allowed to orthogonally cross with each other to prepare a heat exchange element of 400 mm in longitudinal length by 400 mm in transversal length by 200 mm in height. An air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 83%, 73%, 73 Pa and 89%, respectively. Moreover, the height of flute and the pitch of the corrugated sheet in the heat exchange element were determined to be 2.0 mm and 4.8 mm, respectively. The results are shown in Table 3.

(Comparative Example 3)

Pulp constituted of 60% by mass of N pulp and 40% by mass of L pulp, in a concentration of 30 g per 10 L of water, was placed in a niagara beater for testing available from KUMAGAI RIKI KOGYO Co., Ltd. and beaten to obtain pulp fibers with a beating degree in the Canadian standard freeness test specified in JIS P8121 (1995) of 180 ml. Next, using a fourdrinier paper machine, base paper with a thickness of 57 $\mu$m and a basis weight of 40 g/m$^2$ was obtained. The obtained base paper was dipped in an aqueous lithium chloride solution, pressed with a mangle and dried with a heat roll to obtain a liner sheet 1D which is added with lithium chloride in an amount of 15% by mass and has a thickness of 60 $\mu$m and a basis weight of 46 g/m$^2$. With regard to the obtained liner sheet 1D, the carbon dioxide shielding rate was determined to be 83%, the water vapor permeability was determined to be 79 g/m$^2$/hr, and the air permeability was determined to be 9,734 seconds/100 ml.

A piece of single-faced corrugated cardboard 1D was obtained by the following method. The liner sheet 1D, the corrugated sheet 1A of Example 1 and an adhesive were used to obtain a piece of single-faced corrugated cardboard with a height of flute of 2.0 mm and a pitch of 4.8 mm by means of a single-faced corrugated cardboard manufacturing machine. As the adhesive, an ethylene-vinyl acetate copolymer emulsion (solid content of 50% by mass) was used.

The liner sheet 2A, the corrugated sheet 2A and the single-faced corrugated cardboard 2A of Example 1 were used.

On top portions of mountain-like parts of the corrugated sheets in the single-faced corrugated cardboard 1D and single-faced corrugated cardboard 2D, an adhesive was applied, firstly, 20 pieces of single-faced corrugated cardboard 2D were stacked so that corrugated stripe directions of respective two adjacent pieces were allowed to orthogonally cross with each other, and 80 pieces of single-faced corrugated cardboard 1D were stacked thereon to prepare a heat exchange element of 400 mm in longitudinal length by 400 mm in transversal length by 200 mm in height. The area ratio of the liner sheet 1D and the liner sheet 2D of the heat exchange element was 80% : 20% in the whole heat exchange element, 60% : 40% in the portion of a heat exchange element height of 0 to 50%, and 100% : 0% in the portion of a heat exchange element height of 51 to 100%.

An air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 82%, 70%, 75 Pa and 82%, respectively. Moreover, the height of flute and the pitch of the corrugated sheet in the heat exchange element were determined to be 2.0 mm and 4.8 mm, respectively. The results are shown in Table 3.

(Comparative Example 4)

The liner sheet 1A, the corrugated sheet 1A and the single-faced corrugated cardboard 1A of Example 1 were used. Moreover, the single-faced corrugated cardboard 1D prepared in Comparative Example 3 was used as the single-faced corrugated cardboard 2E. The liner sheet 1D used for the single-faced corrugated cardboard 2E is referred to as the liner sheet 2E here.

On top portions of mountain-like parts of the corrugated sheets in the single-faced corrugated cardboard 1A and single-faced corrugated cardboard 2E, an adhesive was applied, firstly, 20 pieces of single-faced corrugated cardboard 2E were stacked so that corrugated stripe directions of respective two adjacent pieces were allowed to orthogonally cross with each other, and 80 pieces of single-faced corrugated cardboard 1A were stacked thereon to prepare a heat exchange element of 400 mm in longitudinal length by 400 mm in transversal length by 200 mm in height. The area ratio of the liner sheet 1A and the liner sheet 2E of the heat exchange element was 80% : 20% in the whole heat exchange element, 60% : 40% in the portion of a heat exchange element height of 0 to 50%, and 100% : 0% in the portion of a heat exchange element height of 51 to 100%. Moreover, an air supply multiblade blower was attached to the downstream side of a passage for air supply of the obtained heat exchange element and an air exhaust multiblade blower was attached to the downstream side of a passage for air exhaust of the heat exchange element to obtain a heat exchanger, and the temperature exchange efficiency (air heating condition), the humidity exchange efficiency (air cooling condition), the pressure loss and the effective ventilation volume rate of the heat exchange element were measured. With regard to the obtained heat exchange element, the temperature exchange efficiency (air heating condition), the humidity exchange efficiency (air cooling condition), the pressure loss and the effective ventilation volume rate were determined to be 81%, 59%, 75 Pa and 97%, respectively. Moreover, the height of flute and the pitch of the corrugated sheet in the heat exchange element were determined to be 2.0 mm and 4.8 mm, respectively. The results are shown in Table 3.

[Table 1]

[Table 1]

| | | | | | Example 1 | Example 2 | Example 3 | Example 4 | Example 5 |
|---|---|---|---|---|---|---|---|---|---|
| Single-faced corrugated cardboard 1 | Liner sheet 1 | Substrate sheet | Layer constitution | | Single-layer | Single-layer | Single-layer | Single-layer | Single-layer |
| | | | Material | | Pulp | Pulp | Pulp | Pulp | Pulp |
| | | | Mixing ratio | % by mass | 100 | 100 | 100 | 100 | 100 |
| | | | Beating degree | ml | 90 | 90 | 90 | 90 | 90 |
| | | Carbon dioxide shielding rate | | % | 99 | 99 | 99 | 99 | 99 |
| | | Water vapor permeability | | g/m²/hr | 75 | 75 | 75 | 75 | 75 |
| | Corrugated sheet 1 | Thickness | | µm | 73 | 73 | 73 | 73 | 73 |
| | | Basis weight | | g/m² | 60 | 60 | 60 | 60 | 60 |
| Single-faced corrugated cardboard 2 | Liner sheet 2 | Substrate sheet | Layer constitution | | Two-layer | Two-layer | Two-layer | Two-layer | Two-layer |
| | | | First layer | Material | Pulp | Pulp | Pulp | Pulp | Pulp |
| | | | | Mixing ratio (% by mass) | 40 | 40 | 40 | 40 | 40 |
| | | | Second layer | Material | N6-NF | N6-NF | N6-NF | N6-NF | N6-NF |
| | | | | Mixing ratio (% by mass) | 60 | 60 | 60 | 60 | 60 |
| | | Carbon dioxide shielding rate | | % | 50 | 50 | 50 | 50 | 50 |
| | | Water vapor permeability | | g/m²/hr | 91 | 91 | 91 | 91 | 91 |
| | Corrugated sheet 2 | Thickness | | µm | 73 | 73 | 73 | 73 | 73 |
| | | Basis weight | | g/m² | 60 | 60 | 60 | 60 | 60 |
| Total heat exchange element | | Constitution | Whole element | Area ratio of liner sheet 1 % | 60 | 50 | 80 | 90 | 90 |
| | | | | Area ratio of liner sheet 2 % | 40 | 50 | 20 | 20 | 10 |
| | | | Element height 51 to 100% | Area ratio of liner sheet 1 % | 100 | 100 | 100 | 60 | 100 |
| | | | | Area ratio of liner sheet 2 % | 0 | 0 | 0 | 40 | 0 |
| | | | Element height 0 to 50% | Area ratio of liner sheet 1 % | 20 | 0 | 60 | 100 | 80 |
| | | | | Area ratio of liner sheet 2 % | 80 | 100 | 40 | 0 | 20 |
| | | Width | | mm | 350 | 350 | 350 | 350 | 350 |
| | | Length | | mm | 350 | 350 | 350 | 350 | 350 |
| | | Height | | mm | 220 | 220 | 220 | 220 | 220 |
| | | Height of flute | | mm | 2.0 | 2.0 | 2.0 | 2.0 | 2.0 |
| | | Pitch | | mm | 4.8 | 4.8 | 4.8 | 4.8 | 4.8 |
| | | Temperature exchange efficiency (Air heating condition) | | % | 83 | 82 | 82 | 82 | 81 |
| | | Humidity exchange efficiency (Air cooling condition) | | % | 70 | 72 | 67 | 61 | 62 |
| | | Pressure loss | | Pa | 74 | 74 | 75 | 75 | 75 |
| | | Effective ventilation volume rate | | % | 95 | 95 | 96 | 96 | 97 |

N6-NF: nylon 6 nanofiber

[Table 2]

| | | | Unit | Example 6 | Example 7 | Example 8 | Example 9 | Example 10 |
|---|---|---|---|---|---|---|---|---|
| Single-faced corrugated cardboard 1 | Liner sheet 1 | Substrate sheet — Layer construction — Material | | Pulp | Pulp | Pulp | Pulp | Pulp |
| | | Substrate sheet — Layer construction — Mixing ratio | % by mass | 100 | 100 | 100 | 100 | 100 |
| | | Beating degree | ml | 90 | 50 | 150 | 90 | 90 |
| | | Carbon dioxide shielding rate | % | 99 | 99 | 98 | 99 | 99 |
| | | Water vapor permeability | g/m²/hr | 75 | 72 | 77 | 75 | 75 |
| | Corrugated sheet 1 | Thickness | μm | 73 | 73 | 73 | 73 | 73 |
| | | Basis weight | g/m² | 60 | 60 | 60. | 60 | 60 |
| Single-faced corrugated cardboard 2 | Liner sheet 2 | Substrate sheet — Layer construction | | Two-layer | Two-layer | Two-layer | One-layer | One-layer |
| | | First layer — Material | | Pulp | Pulp | Pulp | PP | PP |
| | | First layer — Mixing ratio | % by mass | 40 | 40 | 40 | 100 | 100 |
| | | Second layer — Material | | N6-NF | N6-NF | N6-NF | – | – |
| | | Second layer — Mixing ratio | % by mass | 60 | 60 | 60 | – | – |
| | | Carbon dioxide shielding rate | % | 50 | 50 | 50 | 3 | 6 |
| | | Water vapor permeability | g/m²/hr | 91 | 91 | 91 | 101 | 80 |
| | Corrugated sheet 2 | Thickness | μm | 73 | 73 | 73 | 73 | 73 |
| | | Basis weight | g/m² | 60 | 60 | 60 | 60 | 60 |
| Total heat exchange element | Constitution | Whole element — Area ratio of liner sheet 1 | % | 40 | 80 | 80 | 80 | 80 |
| | | Whole element — Area ratio of liner sheet 2 | % | 60 | 20 | 20 | 20 | 20 |
| | | Element height 51 to 100% — Area ratio of liner sheet 1 | % | 80 | 100 | 100 | 100 | 100 |
| | | Element height 51 to 100% — Area ratio of liner sheet 2 | % | 20 | 0 | 0 | 0 | 0 |
| | | Element height 0 to 50% — Area ratio of liner sheet 1 | % | 0 | 60 | 60 | 60 | 60 |
| | | Element height 0 to 50% — Area ratio of liner sheet 2 | % | 100 | 40 | 40 | 40 | 40 |
| | Width | | mm | 350 | 350 | 350 | 350 | 350 |
| | Length | | mm | 350 | 350 | 350 | 350 | 350 |
| | Height | | mm | 220 | 220 | 220 | 220 | 220 |
| | Height of flute | | mm | 2.0 | 2.0 | 2.0 | 2.0 | 2.0 |
| | Pitch | | mm | 4.8 | 4.8 | 4.8 | 4.8 | 4.8 |
| | Temperature exchange efficiency (Air heating condition) | | % | 83 | 81 | 82 | 86 | 86 |
| | Humidity exchange efficiency (Air cooling condition) | | % | 72 | 65 | 68 | 75 | 65 |
| | Pressure loss | | Pa | 74 | 75 | 75 | 69 | 69 |
| | Effective ventilation volume rate | | % | 92 | 93 | 95 | 90 | 91 |

N6-NF: nylon 6 nanofiber    PP: polypropylene

[Table 3]

| | | | | Comparative Example 1 | Comparative Example 2 | Comparative Example 3 | Comparative Example 4 |
|---|---|---|---|---|---|---|---|
| Single-faced corrugated cardboard 1 | Liner sheet 1 | Substrate sheet | Layer construction | Single-layer | - | Single-layer | Single-layer |
| | | | Material | Pulp | - | Pulp | Pulp |
| | | | Mixing ratio (% by mass) | 100 | - | 100 | 100 |
| | | | Beating degree (mL) | 90 | - | 100 | 90 |
| | | Carbon dioxide shielding rate (%) | | 99 | - | 93 | 99 |
| | | Water vapor permeability (g/m²/hr) | | 75 | - | 79 | 75 |
| | Corrugated sheet 1 | Thickness (μm) | | 73 | - | 73 | 73 |
| | | Basis weight (g/m²) | | 60 | - | 60 | 60 |
| Single-faced corrugated cardboard 2 | Liner sheet 2 | Substrate sheet | Layer construction | - | Two-layer | Two-layer | Single-layer |
| | | First layer | Material | - | Pulp | Pulp | Pulp |
| | | | Mixing ratio (% by mass) | - | 40 | 40 | 100 |
| | | Second layer | Material | - | N6-NF | N6-NF | - |
| | | | Mixing ratio (% by mass) | - | 60 | 60 | - |
| | | Carbon dioxide shielding rate (%) | | - | 50 | 50 | 93 |
| | | Water vapor permeability (g/m²/hr) | | - | 91 | 91 | 75 |
| | Corrugated sheet 2 | Thickness (μm) | | - | 73 | 73 | 73 |
| | | Basis weight (g/m²) | | - | 60 | 60 | 60 |
| Total heat exchange element | Construction | Whole element | Area ratio of liner sheet 1 (%) | 100 | 0 | 80 | 80 |
| | | | Area ratio of liner sheet 2 (%) | 0 | 100 | 20 | 20 |
| | | Element height 51 to 100% | Area ratio of liner sheet 1 (%) | 100 | 0 | 100 | 100 |
| | | | Area ratio of liner sheet 2 (%) | 0 | 100 | 0 | 0 |
| | | Element height 0 to 50% | Area ratio of liner sheet 1 (%) | 100 | 0 | 60 | 60 |
| | | | Area ratio of liner sheet 2 (%) | 0 | 100 | 40 | 40 |
| | Width (mm) | | | 350 | 350 | 350 | 350 |
| | Length (mm) | | | 350 | 350 | 350 | 350 |
| | Height (mm) | | | 220 | 220 | 220 | 220 |
| | Height of flute (mm) | | | 2.0 | 2.0 | 2.0 | 2.0 |
| | Pitch (mm) | | | 4.8 | 4.8 | 4.8 | 4.8 |
| | Temperature exchange efficiency (Air heating condition) (%) | | | 80 | 83 | 82 | 81 |
| | Humidity exchange efficiency (Air cooling condition) (%) | | | 55 | 73 | 70 | 59 |
| | Pressure loss (Pa) | | | 73 | 73 | 73 | 75 |
| | Effective ventilation volume rate (%) | | | 90 | 89 | 82 | 97 |

N6-NF: nylon 6 nanofiber

DESCRIPTION OF REFERENCE SIGNS

3: Heat exchanger
4: Heat exchange element
5A: Passage for air supply
5B: Passage for air exhaust
6A: Air supply multiblade blower
6B: Air exhaust multiblade blower
7A: Air supply multiblade blower suction opening
7B: Air exhaust multiblade blower suction opening
8A: Air supply multiblade blower blowoff opening
8B: Air exhaust multiblade blower blowoff opening
9A: Air supply suction opening
9B: Air exhaust suction opening
10A: Air supply blowoff opening
10B: Air exhaust blowoff opening

**Claims**

1. A heat exchange element, which is a stack of a piece of single-faced corrugated cardboard 1 constituted of a liner sheet 1 with a carbon dioxide shielding rate of greater than or equal to 95% and a corrugated sheet 1 and a piece of single-faced corrugated cardboard 2 constituted of a liner sheet 2 with a water vapor permeability of greater than or equal to 80 g/m$^2$·hr and a corrugated sheet 2.

2. The heat exchange element according to claim 1, wherein a ratio of an area of the liner sheet 2 to the sum of areas of the liner sheet 1 and the liner sheet 2 in the heat exchange element is 20 to 50%.

3. The heat exchange element according to claim 1 or 2, wherein the area ratio of the liner sheet 2 to the sum of areas of the liner sheet 1 and the liner sheet 2 in a portion from at least one face among two bottom faces which the heat exchange element has to a height position of 50% of a distance between the two bottom faces is greater than or equal to 40%.

4. The heat exchange element according to any one of claims 1 to 3, wherein the liner sheet 1 includes pulp with a Canadian standard freeness of less than or equal to 150 ml.

5. The heat exchange element according to any one of claims 1 to 4, wherein the liner sheet 1 includes pulp with a fiber diameter of greater than or equal to 20 $\mu$m.

6. The heat exchange element according to any one of claims 1 to 5, wherein the liner sheet 2 includes at least one layer of a gas shielding layer and at least one layer of a porous layer, and has a stacked structure thereof.

7. The heat exchange element according to any one of claims 1 to 6, wherein the porous layer of the liner sheet 2 includes nanofibers of a thermoplastic resin.

8. A heat exchanger, comprising the heat exchange element according to any one of claims 1 to 7, an air supply blower and an air exhaust blower.

9. A heat exchanger, comprising the heat exchange element according to claim 3, an air supply multiblade blower and an air exhaust multiblade blower,
wherein the heat exchange element has a passage for air supply and a passage for air exhaust which are stacks of a piece of single-faced corrugated cardboard 1 and a piece of single-faced corrugated cardboard 2,
the air supply multiblade blower is disposed at the downstream side of the passage for air supply of the heat exchange element,
the air exhaust multiblade blower is disposed at the downstream side of the passage for air exhaust of the heat exchange element, and
one bottom face of the heat exchange element allowing the area ratio of the liner sheet 2 to the sum of areas of the liner sheet 1 and the liner sheet 2 in a portion therefrom to a height position of 50% of the distance to be greater than or equal to 40% is positioned apart from a suction opening of the air supply multiblade blower, as compared with the other bottom face.

【Fig.1】

【Fig.2】

# INTERNATIONAL SEARCH REPORT

| | International application No. |
|---|---|
| | PCT/JP2014/076026 |

**A. CLASSIFICATION OF SUBJECT MATTER**
*F24F7/08*(2006.01)i, *D21H27/00*(2006.01)i, *D21H27/30*(2006.01)i, *F28F3/08*(2006.01)i, *F28F21/00*(2006.01)i

According to International Patent Classification (IPC) or to both national classification and IPC

**B. FIELDS SEARCHED**

Minimum documentation searched (classification system followed by classification symbols)
F24F7/08, D21H27/00, D21H27/30, F28F3/08, F28F21/00

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-135577 A (Toray Coatex Co., Ltd.),<br>13 May 2003 (13.05.2003),<br>paragraphs [0021] to [0033]<br>(Family: none) | 1,4-8<br>2-3,9 |
| Y | JP 2011-12894 A (Panasonic Corp.),<br>20 January 2011 (20.01.2011),<br>paragraphs [0084] to [0092]; fig. 1 to 3<br>(Family: none) | 1,4-8 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 December 2014 (25.12.14) | 13 January 2015 (13.01.15) |

| Name and mailing address of the ISA/<br>    Japan Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/076026

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-32390 A  (Mitsubishi Paper Mills Ltd.),<br>14 February 2008 (14.02.2008),<br>paragraphs [0045] to [0053]<br>& JP 4252892 B          & US 2003/0226656 A1<br>& US 2013/0233529 A1     & EP 1403430 A1<br>& EP 2312051 A2          & WO 2002/099193 A1<br>& CN 1463315 A           & CN 1661160 A<br>& KR 10-0520722 B1       & AU 2002304108 B | 4-8 |
| Y | JP 2013-167408 A  (Toray Industries, Inc.),<br>29 August 2013 (29.08.2013),<br>claim 3<br>(Family: none) | 7-8 |
| Y | Microfilm of the specification and drawings<br>annexed to the request of Japanese Utility<br>Model Application No. 155073/1984(Laid-open<br>No. 71837/1986)<br>(Misawa Homes Co., Ltd.),<br>16 May 1986 (16.05.1986),<br>page 2, line 1 to page 3, line 2; fig. 8 to 9<br>(Family: none) | 8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010248680 A
- JP 2005325473 A
- JP 2005299069 A
- JP 5310665 A